# EUROPEAN PATENT APPLICATION

(11) **EP 3 944 558 A1**
(43) Date of publication of application: **26.01.2022**
(21) Application number: 21196745.0
(22) Date of filing: 27.12.2019
(51) Int. Cl.: H04L 12/12

(54) **PACKET COMMUNICATION SYSTEM, INFRASTRUCTURE SYSTEM USING PACKET COMMUNICATION SYSTEM, BUILDING AUTOMATION SYSTEM,AND FACTORY AUTOMATION SYSTEM**

(30) Priority: 05.02.2019 JP 2019018495; 05.02.2019 JP 2019018496; 05.02.2019 JP 2019018497
(62) Divisional of application: 19914535.0
(71) Applicant: Step Technica Co., Ltd., Iruma-shi, Saitama, 358-0011 (JP)
(72) Inventor: MUGITANI, Tomihiro, Saitama, 358-0011 (JP); NAKAJIMA, Tatsuhiko, Saitama, 358-0011 (JP)
(74) Representative: Kador & Partner PartG mbB

(57) **Abstract**

To provide a packet communication system that adopts a multidrop system capable of performing high-speed communication even in infrastructure, factory automation, building automation, and other systems.

In a packet communication system in which a central apparatus 200 and a plurality of terminal apparatuses 300 are multidrop-connected to each other, the central apparatus 200 is an instrument that transmits a packet including transmission source information indicating the central apparatus 200, each of the terminal apparatuses 300 is an instrument that can also function as a repeater, and includes a setting unit 340 that sets whether or not the terminal apparatus 300 functions as the repeater, a generation unit 320 that generates a packet including repeating source information indicating the terminal apparatus 300 in a case where it is set in the setting unit 340 that the terminal apparatus 300 functions as a repeater, and a processing unit 330 that discards a packet that does not include the repeating source information.

## Description

### Technical Field

The present invention relates to a packet communication system, an infrastructure system using the packet communication system, a building automation system, and a factory automation system, and more particularly, to a multidrop packet communication system, an infrastructure system using the multidrop packet communication system, a building automation system, and a factory automation system.

### Background Art

Patent Literature 1 discloses an electronic wiring system using automatic communication filed by the present applicant. In this electronic wiring system, an integrated circuit (IC) central apparatus having a shared memory is provided on a control center side, an integrated circuit (IC) terminal apparatus having an input/output port and a transmission/reception circuit is connected to each control object (device) side, the central apparatus and each terminal apparatus are connected with a multidrop system through a digital communication line (a communication cable), and data exchange of a command packet and a response packet is performed at a high speed and via the shared memory by a full duplex system without a protocol of a program. With this electronic wiring system, it is possible to perform high-speed data communication with a simple configuration, easy development and maintenance, and a low cost, in which wiring is performed between a control center having a microprocessor and a plurality of control objects that do not have a microprocessor and are disposed in a distributed manner.
Patent Literature 1: JP 9-326808 A

### Summary of Invention

### Technical Problem

In the electronic wiring system described in Patent Literature 1, it is known that there is a trade-off relationship between a packet communication speed and the length of a communication cable. For example, in the case of the industrial robot system or the like disclosed in Fig. 9 of Patent Literature 1, since the total extension of a communication cable connecting a central apparatus and a terminal apparatus is generally about 10 m, high-speed communication can be performed at about 12 Mbps, and the signal response time can be as fast as several ms.

On the other hand, in an infrastructure system, a factory automation system, a building automation system, and the like, the total length of a communication cable to be used reaches 1 km in some cases. In this case, the available upper limit of the packet communication speed is often recognized as about 20 Kbps, and the signal response time is as low as several hundred ms to several seconds.

In recent years, there has been a need for performance improvement in infrastructure, factory automation, building automation, and other systems, and there has also been a need for a technique of improving the signal responsiveness of a packet communication system.

Therefore, an object of the present invention is to provide a packet communication system that adopts a multidrop system capable of performing high-speed communication even in infrastructure, factory automation, building automation, and other systems.

### Solution to Problem

In order to solve the above problems, the present invention provides
a packet communication system in which a central apparatus and a plurality of terminal apparatuses are multidrop-connected to each other, wherein
the central apparatus is an instrument that transmits a packet including transmission source information indicating the central apparatus,
each of the terminal apparatuses is
an instrument that can also function as a repeater, and includes
a setting unit that sets whether or not the terminal apparatus functions as the repeater,
a generation unit that generates a packet including repeating source information indicating the terminal apparatus in a case where it is set in the setting unit that the terminal apparatus functions as a repeater, and
a discard unit that discards a packet that does not include the repeating source information.

The plurality of terminal apparatuses include
a first terminal apparatus that is installed close to the central apparatus from a viewpoint of wiring, and
a second terminal apparatus that is installed away from the central apparatus from a viewpoint of wiring, and
in a case where the first terminal functions as a repeater that repeats communication between the central apparatus and the second terminal apparatus, the second terminal apparatus can discard a packet transmitted from the central apparatus.

Further, according to the present invention,
in the packet communication system in which a central apparatus and a plurality of terminal apparatuses are multidrop-connected to each other,
the central apparatus includes
a first transmitter capable of transmitting a packet at a first speed prepared in advance, and
a second transmitter capable of transmitting a packet at a second speed that is lower than the first speed and is prepared in advance,
each of the terminal apparatuses includes
a first receiver capable of receiving a packet with the first speed, and
a second receiver capable of receiving a packet with the second speed, and
in a case where a packet is transmitted from the first or second transmitter, each of the terminal apparatuses further includes a determiner that determines whether or not the first or second receiver can receive the packet.

Each of the terminal apparatuses may include
a first response transmitter that transmits a response packet at a first speed in a case where the first receiver receives a packet, and
a second response transmitter that transmits a response packet at a second speed in a case where the second receiver receives a packet, and
the central apparatus may include
the determiner,
a first response receiver that receives a response packet transmitted at a first speed from the first response transmitter, and
a second response receiver that receives a response packet transmitted at a second speed from the second response transmitter.

Further, the present invention provides
a packet communication system including
a terminal apparatus connected to a control object,
a first central apparatus that transmits a first packet including an instruction signal for the control object to the terminal apparatus, and
a second central apparatus that transmits a second packet including an instruction signal for the control object to the terminal apparatus, wherein
the control object is controlled according to an instruction signal in the first or second packet, and
the terminal apparatus includes
a reception unit that receives first and second packets transmitted from the first and second central apparatuses,
a determination unit that determines whether or not a transition instruction signal to transition a state of the control object is included in the first and second packets received by the reception unit,
a clocking unit that starts clocking of a predetermined period in a case where the determination unit determines that the transition instruction signal is included in the first or second packet,
an inhibition unit that inhibits performance of processing according to a transition instruction signal in a case where the determination unit determines that the transition instruction signal is included in a first or second packet received by the reception unit from when the clocking unit starts clocking of a predetermined time to when the clocking unit ends the clocking, and
a transmission unit that transmits an inhibition report packet to a transmission source of the packet in a case where performance of the processing is inhibited by the inhibition unit.

Further, an infrastructure system, a building automation system, or a factory automation system of the present invention includes the packet communication system described above.

### Brief Description of Drawings

Fig. 1 is a schematic explanatory diagram of a packet communication system of the present invention.
Fig. 2A is a block diagram illustrating a schematic configuration of a central apparatus 200 illustrated in Fig. 1.
Fig. 2B is a block diagram illustrating a schematic configuration of a terminal apparatus 300 illustrated in Fig. 1.
Fig. 3 is a timing chart for explaining an outline of operations of the central apparatus 200 and the terminal apparatus 300 illustrated in Fig. 1.
Fig. 4 is a diagram illustrating formats of packets generated by the central apparatus 200 and terminal apparatuses 300A and 300C to 300D illustrated in Fig. 1.
Fig. 5A is a block diagram illustrating a schematic configuration of the central apparatus 200 according to a second embodiment of the present invention.
Fig. 5B is a block diagram illustrating a schematic configuration of the terminal apparatus 300 according to the second embodiment of the present invention.
Fig. 6 is a flowchart illustrating an operation between the central apparatus 200 illustrated in Fig. 5A and the terminal apparatus 300 illustrated in Fig. 5B.
Fig. 7 is a flowchart illustrating an operation between the central apparatus 200 illustrated in Fig. 5A and the terminal apparatus 300 illustrated in Fig. 5B.
Fig. 8 is a block diagram illustrating a schematic configuration of a packet communication system according to a third embodiment of the present invention.
Fig. 9 is a block diagram illustrating a schematic configuration of the terminal apparatus 300 illustrated in Fig. 8.
Fig. 10 is a timing diagram focusing on a central apparatus 200A and a central apparatus 200B, a terminal apparatus 300A and a device 400A connected to the terminal apparatus 300A illustrated in Fig. 9.
Fig. 11 is an explanatory diagram of an infrastructure system according to a first example of the present invention.
Fig. 12 is an explanatory diagram of a factory automation system according to a second example of the present invention.
Fig. 13 is an explanatory diagram of a building automation system according to a third example of the present invention.

### Reference Signs List

- 100: communication cable
- 200, 200A to 200B: central apparatus
- 210: communication unit
- 220: generation unit
- 230: processing unit
- 240: determiner
- 300, 300A to 300D: terminal apparatus
- 310: communication unit
- 320: generation unit
- 330: processing unit
- 340: setting unit
- 350: determination unit
- 360: clocking unit
- 370: inhibition unit
- 400: device

### Description of Embodiments

Hereinafter, embodiments of the present invention will be described with reference to the drawings.

### <Description of Outline of Packet Communication System of Present Invention>

Since the packet communication system of the present invention is completely different from so-called Ethernet in which computers are connected to each other by a LAN cable on a one-to-one basis and perform communication according to a TCP/IP protocol, an outline of the packet communication system of the present invention will be described first.

The packet communication system of the present invention is configured such that N central apparatuses and M terminal apparatuses are multidrop-connected by a communication cable. As described above, since the packet communication system of the present invention is on the premise of an N-to-M connection, the packet communication system is largely different in configuration from Ethernet that can make only a one-to-one connection. Here, N and M are 1 or more, and N = M is also included, but typically, a 1-to-M connection is often adopted.

Here, in the case of the N-to-M connection in multidrop, unlike the case of the one-to-one connection in Ethernet, it is necessary to avoid a plurality of packets transmitted through the communication cable from colliding with each other. The method for this purpose is roughly divided into the following three methods.
(1) A method that is widely adopted in general, and in which a packet transmission time is sequentially instructed to all terminal apparatuses by a central apparatus.
(2) A method of setting in advance a packet transmission schedule in all central apparatuses and terminal apparatuses, which will be mainly described below in the present specification.
(3) A method obtained by combining the methods (1) and (2).

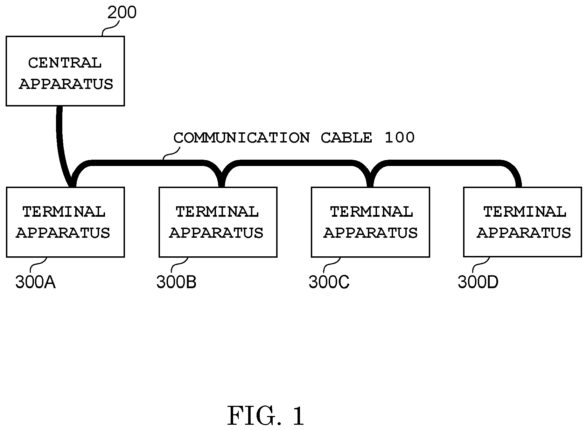

Fig. 1 is a schematic explanatory diagram of the packet communication system of the present invention. For easy understanding, Fig. 1 illustrates a state of "one-to four connection" in which one central apparatus 200 and four terminal apparatuses 300A to 300D are multidrop-connected by a communication cable 100, such as N = 1 and M = 4, as typically illustrated in JP 9-326808 A as Patent Literature 1 which is incorporated herein by reference. Note that, hereinafter, the terminal apparatuses 300A to 300D are collectively referred to as "terminal apparatus 300".

The packet communication system illustrated in Fig. 1 can adopt both a full-duplex communication system and a half-duplex communication system, but in general, the order of transmission and reception of packets between the central apparatus 200 and the terminal apparatus 300 is the same in any of these systems. That is, in the packet communication system as a whole, the central apparatus 200
(1) transmits and receives packets to and from the terminal apparatus 300A in one round trip,
(2) transmits and receives packets to and from the terminal apparatus 300B in one round trip,
(3) transmits and receives packets to and from the terminal apparatus 300C in one round trip, and
(4) transmits and receives packets to and from the terminal apparatus 300D in one round trip.

More specifically, in the case of the half-duplex communication system, the central apparatus 200
(1-1) transmits packets intended for the terminal apparatus 300A,
(1-2) thus receives packets from the terminal apparatus 300A,
(2-1) transmits packets intended for the terminal apparatus 300B,
(2-2) thus receives packets from the terminal apparatus 300B,
(3-1) transmits packets intended for the terminal apparatus 300C,
(3-2) thus receives packets from the terminal apparatus 300C,
(4-1) transmits packets intended for the terminal apparatus 300D, and
(4-2) thus receives packets from the terminal apparatus 300D.

In this case, the terminal apparatus 300 normally receives all the packets transmitted through the communication cable 100. Here, the packets include both a packet transmitted from the central apparatus 200 and a packet transmitted from another terminal apparatus 300.

Then, the terminal apparatus 300 captures only packets transmitted at the timing when packets for the terminal apparatus 300 are transmitted among all the packets received once, and discards packets transmitted at another timing.

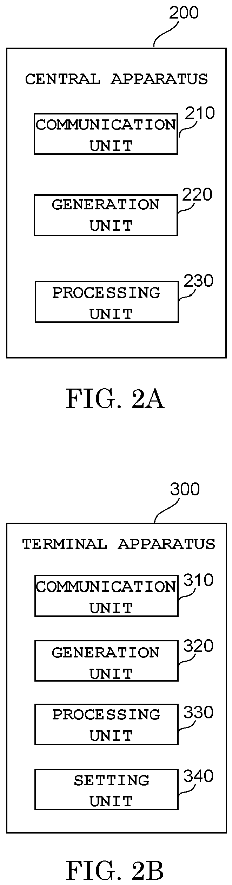

As an example, the terminal apparatus 300C temporarily receives packets transmitted from the central apparatus 200 in the above period (1-1), but the period (1-1) is the timing when packets for the terminal apparatus 300A are transmitted and is not the timing when packets for the terminal apparatus 300C are transmitted (the timing when packets for the terminal apparatus 300C are transmitted is the period (3-1)). Consequently, in the terminal apparatus 300C, the packets are discarded by a processing unit 330 (Fig. 2).

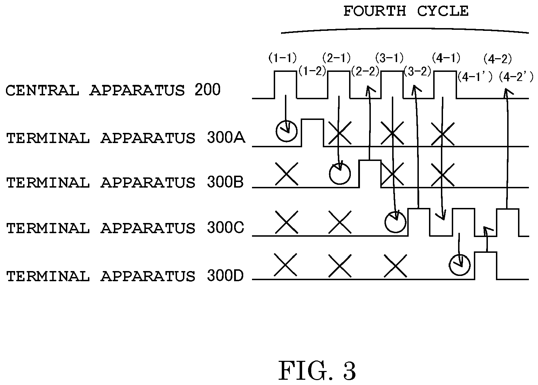

In the present specification, the period required for making a round of the above (1-1) to (4-2) is referred to as "certain period". Typically, the certain period can be appropriately set by a system design. However, as will be described later with reference to Fig. 3, typically, the response to the packet transmitted from the central apparatus 200 to the terminal apparatus 300A is immediately included in the packet transmitted from the terminal apparatus 300A to the central apparatus 200 and returned within the same cycle.

On the other hand, in the case of the full-duplex communication system, the downlink through which packets from the central apparatus 200 to the terminal apparatus 300 are transmitted and the uplink through which packets from the terminal apparatus 300 to the central apparatus 200 are transmitted are separately provided. Consequently, for example, paired periods can be combined into one set, such as a set of the period (2-1) and the period (1-2) of a fourth cycle, a set of the period (3-1) and the period (2-2) of the fourth cycle, a set of the period (4-1) and the period (3-2) of the fourth cycle, and a set of the period (1-1) of a fifth cycle and the period (4-2) of the fourth cycle.

That is, in the case of the full-duplex communication system, for example, the period in which packets are transmitted from the central apparatus 200 to the terminal apparatus 300B and the period in which packets are transmitted from the terminal apparatus 300A to the central apparatus 200 can be matched with each other. Consequently, the length of "certain period" in the case of the full-duplex communication system is about half the length of "certain period" in the case of the half-duplex communication system, when a comparison is made in the case where the system configuration is implemented under the same conditions.

Here, the header of a packet may include the destination assigned to the transmission destination of the packet, but required communication can be performed without including the destination. Note that, in a case where the destination is included in the header, if the terminal apparatus 300 confirms the destination of the packet in the header of the received packet and determines that the packet is a packet addressed to the terminal apparatus 300, the terminal apparatus 300 captures the packet and performs processing according to the information included in the payload of the packet, and on the other hand, if the terminal apparatus 300 determines that the packet is not a packet addressed to the terminal apparatus 300, the terminal apparatus 300 can discard the packet.

On the other hand, in a case where the destination is not included in the header, it is necessary to fixedly determine in advance each of the above periods (1-1) to (4-2), that is, a period in which the central apparatus 200 and the terminal apparatus 300 can transmit packets from the central apparatus 200 and the terminal apparatus 300, and to have a common time schedule so that it is possible to determine which period of (1-1) to (4-2) the central apparatus 200 and the terminal apparatus 300 are currently in.

As a result, even if the destination of the packet is not included in the header of the received packet, it is possible to determine whether or not the packet is addressed to the apparatus itself on the basis of the timing of receiving the packet, and thus, it is possible to selectively perform either capturing or discarding of the packet according to the timing.

To make sure of that, the periods (1-1), (2-1), (3-1), and (4-1) are set as periods in which only the central apparatus 200 can transmit packets. In addition, the period (1-2) is set as a period in which only the terminal apparatus 300A can transmit packets, the period (2-2) is set as a period in which only the terminal apparatus 300B can transmit packets, the period (3-2) is set as a period in which only the terminal apparatus 300C can transmit packets, and the period (4-2) is set as a period in which only the terminal apparatus 300D can transmit packets. Note that, it is essential for each of the periods (1-1) to (4-2) to have a minimum length required for packets to be reliably received at a packet transmission destination.

As a result, for example, even if the terminal apparatus 300 receives packets transmitted from the central apparatus 200 in the period (1-1), only the terminal apparatus 300A can capture the packets, and the terminal apparatuses 300B to 300D can discard the packets.

It should be noted that, in the packet communication system of the present invention, the central apparatus 200 may function as the terminal apparatus 300 under certain conditions, and conversely, the terminal apparatus 300 may function as the central apparatus 200 under certain conditions.

On the basis of the following points, the packet communication system according to the first to third embodiments of the present invention will be described below.
- The first embodiment will describe the means for increasing the packet communication speed of the entire system.
- The second embodiment will describe the means for optimizing the packet communication speed between each of the central apparatuses 200 and each of the terminal apparatuses 300.
- The third embodiment will describe the means for solving secondary problems that may occur when the methods of the first and second embodiments are adopted, assuming that it is essential to install a plurality of the central apparatuses 200.

### (First Embodiment)

### <Description of Overall Configuration of Packet Communication System>

The description returns to Fig. 1 again. The central apparatus 200 transmits information related to a device (a control object) connected to the terminal apparatus 300 to the terminal apparatus 300, and in response thereto, receives information related to the device transmitted from the terminal apparatus 300.

Examples of the device herein include various types of sensors, lamps, motors, solenoids, and the like. In these examples, the central apparatus 200 may transmit packets including information instructing the terminal apparatus 300 to acquire sensor results from various types of sensors and reply to the sensors, or may transmit packets including information instructing the terminal apparatus 300 to switch the amount of light of the lamp, the rotation speed of the motor, and the opening and closing of the solenoid.

Meanwhile, the packet communication system illustrated in Fig. 1 can be suitably applied to various types of industrial fields such as infrastructure, factory automation, and building automation as will be described later using some examples. Then, for example, the total length of the communication cable 100 connecting the central apparatus 200 and the terminal apparatus 300D farthest from the central apparatus 200 may be several hundred meters to 1 km, or even longer.

In the packet communication system, since the relationship between the packet communication speed and the length of the communication cable 100 is in a trade-off relationship, in a case where the communication cable 100 connecting the central apparatus 200 and the terminal apparatus 300 is relatively long, packet communication cannot be performed unless the packet communication speed between the central apparatus 200 and the terminal apparatus 300 is low, and conversely, in a case where the communication cable 100 connecting the central apparatus 200 and the terminal apparatus 300 is relatively short, packet communication can be performed even when the packet communication speed between the central apparatus 200 and the terminal apparatus 300 is high.

In order to solve such a trade-off problem between the packet communication speed and the length of the communication cable 100, it is conceivable to incorporate a repeater in a communication system in the wireless communication field. According to this method, the determiner of the radio wave intensity of an analog signal is mounted on a terminal apparatus for wireless communication, and thus whether or not to incorporate a repeater is determined by utilizing the determiner.

Specifically, by measuring the radio wave intensity of a signal in which packets are superimposed using the determiner mounted on each terminal apparatus, the quality determination of a communication state is performed on the basis of the measurement result. The repeater is incorporated upstream of the terminal apparatus in which the communication state is poor.

However, it is difficult to incorporate such quality determination in the field of wired communication such as the packet communication system illustrated in Fig. 1 because the terminal apparatus 300 does not include the determiner of the radio wave intensity of an analog signal or a device similar to the determiner.

However, it is not impossible to perform quality determination similar to that in the case of wireless communication, but in this case, it is necessary to mount a determiner of the waveform state of an analog signal on the terminal apparatus 300. However, in this case, the configuration of the terminal apparatus 300 becomes complicated, and the determiner of the waveform state of an analog signal is generally expensive, which leads to an increase in cost of the terminal apparatus 300A and an increase in cost of the entire packet communication system.

In view of such circumstances, the packet communication system illustrated in Fig. 1 does not adopt the method similar to that in the case of the wireless communication, and determine whether or not to incorporate a repeater by a method different from the quality determination performed in the case of wireless communication. In a case where high packet communication speed is required, the repeater is incorporated as necessary. Strictly in the present embodiment, some of the terminal apparatuses 300 are caused to function also as repeaters so that the length of the communication cable 100 connecting the central apparatus 200 and the terminal apparatus 300 is not limited.

### <Description of Configurations of Central apparatus 200 and Terminal apparatus 300>

Fig. 2 is a block diagram illustrating schematic configurations of the central apparatus 200 and the terminal apparatus 300 illustrated in Fig. 1. Fig. 2A illustrates a configuration of the central apparatus 200, and Fig. 2B illustrates a configuration of the terminal apparatus 300.

The central apparatus 200 illustrated in Fig. 2A includes a communication unit 210 that performs packet communication with the terminal apparatus 300 via the communication cable 100, a generation unit 220 that generates a packet to be transmitted by the communication unit 210, and a processing unit 230 that performs processing according to information included in a payload of the packet received by the communication unit 210.

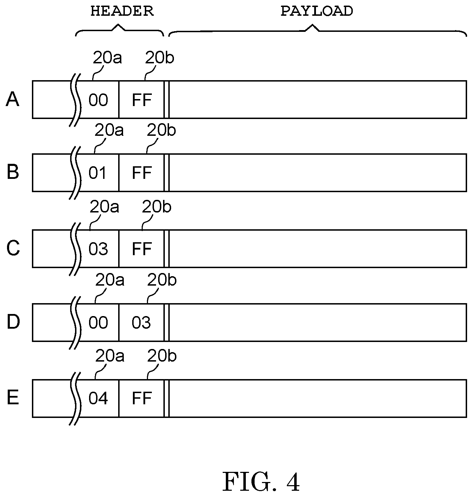

Note that, although the format of the packet generated by the generation unit 220 will be described later with reference to Fig. 4, the generation unit 220 needs to include, in the packet, unique information (for example, an address uniquely assigned to the central apparatus 200) that uniquely indicates that the central apparatus 200 is a transmission source and that is assigned to the central apparatus 200, regardless of whether the full-duplex communication system or the half-duplex communication system is adopted, in order to achieve necessary communication in the present embodiment.

Alternatively, the necessary communication can be achieved by, instead of including the unique information in the packet, designating the transmission source and the transmission destination of the packet on the basis of the time schedule of the entire system.

Furthermore, for example, some of the communication unit 210, the generation unit 220, and the processing unit 230 can be configured as a so-called communication unit, can be configured with general-purpose hardware such as a CPU and a memory, or can be configured with a dedicated LSI such as a state machine.

Here, in the present embodiment, some of the terminal apparatuses 300 can also function as repeaters between the central apparatus 200 and the other terminal apparatuses 300 so that packet communication can be performed without reducing the packet communication speed between the central apparatus 200 and the terminal apparatuses 300 even in a case where the communication cable 100 connecting the central apparatus 200 and the terminal apparatus 300 is relatively long.

Specifically, for example, there is a case where the communication cable 100 connecting the central apparatus 200 and the terminal apparatus 300D is relatively long, and thus communication between the central apparatus 200 and the terminal apparatus 300D cannot not be performed at a high communication speed. In this case, a low communicable speed between the central apparatus 200 and the terminal apparatus 300D will be normally adopted in the entire communication system. However, in the present embodiment, the terminal apparatus 300C is made to function as a repeater between the central apparatus 200 and the terminal apparatus 300D, so that a high communication speed can be adopted in the entire communication system.

Note that, in this example, the repeat means that information transmitted from the central apparatus 200 to the terminal apparatus 300D is lost or the like due to the relatively long communication cable 100, and cannot be directly received by the terminal apparatus 300D in some cases, and thus a packet transmitted from the central apparatus 200 to the terminal apparatus 300D is transmitted by the terminal apparatus 300C, or a packet transmitted from the terminal apparatus 300D to the central apparatus 200 is transmitted by the terminal apparatus 300C.

Similarly to the configuration of the central apparatus 200, the configuration of the terminal apparatus 300 illustrated in Fig. 2B includes a communication unit 310 that performs packet communication with the central apparatus 200 via the communication cable 100, a generation unit 320 that generates a packet transmitted by the communication unit 310, and the processing unit 330 that performs processing according to information included in a payload of the packet in a case where the packet received by the communication unit 310 is addressed to the terminal apparatus 300 (in a case where the terminal apparatus 300 also functions as a repeater, the repeat destination is also included).

In addition, the terminal apparatus 300 includes a setting unit 340 that sets whether or not the terminal apparatus 300 is a repeater or an apparatus to be repeated separately from the configuration of the central apparatus 200 in order to function as a repeater. Note that, in a case where the terminal apparatus 300 is neither repeater nor an apparatus repeated by the repeater, such information may be set in the setting unit 340, or no setting may be made in the setting unit 340.

In a case where the setting unit 340 sets that the terminal apparatus 300 is a repeater, the generation unit 320 generates a packet including unique repeating source information as described later with reference to Fig. 4. As the repeating source information, a unique address assigned to the terminal apparatus can be simply used, but uniquely fixed information may be separately created and used.

Note that, in a case where the terminal apparatus is an apparatus repeated by the repeater and in a case where the terminal apparatus neither repeater nor an apparatus repeated by the repeater, in order to indicate this, a symbol such as "FF" may be simply used and included in the packet.

The processing performed in the processing unit 330 differs between
(1) a case where the terminal apparatus is not an apparatus repeated by the repeater,
(2) a case where the terminal apparatus also functions as a repeater, and
(3) a case where the terminal apparatus is an apparatus repeated by the repeater.
   (1) In the example illustrated in Fig. 3 to be described below, the terminal apparatuses 300A to 300B correspond to the case where the terminal apparatus is neither a repeater nor an apparatus repeated by the repeater.
   (2) In the example illustrated in Fig. 3, the terminal apparatus 300C corresponds to the case where the terminal apparatus also functions as a repeater. Consequently, the operation of the terminal apparatus 300C includes a case where the terminal apparatus 300C functions as a terminal apparatus itself and a case where the terminal apparatus 300C functions as a repeater. However, since the terminal apparatus 300C does not perform these functions in parallel in terms of time, these functions can be distinguished.
   (3) In the example illustrated in Fig. 3, the terminal apparatus 300D corresponds to the case where the terminal apparatus is an apparatus repeated by the repeater. On the basis of the above description, the operation of the packet communication system will be described.

Fig. 3 is a timing chart describing an outline of an operation in the cases (1) to (3). Fig. 3 illustrates a timing chart in a case where the terminal apparatus 300C also functions as a repeater that repeats the central apparatus 200 and the terminal apparatus 300D, in other words, the terminal apparatus 300D functions as an apparatus repeated by the repeater.

It is added in the uppermost position of Fig. 3 that the present cycle is, for example, the fourth cycle, and in addition to the periods (1-1) to (4-2) described above, a period (4-1') and a period (4-2') that are necessary for the terminal apparatus 300C to repeat the central apparatus 200 and the terminal apparatus 300D are added. Furthermore, Fig. 3 illustrates the presence or absence of a packet transmission function in the central apparatus 200 and the terminal apparatus 300. Specifically, a period in which the packet transmission function is active is indicated as a high-level, and a period in which the packet transmission function is passive is indicated as a low-level.

Consequently, the periods (1-1), (2-1), (3-1), and (4-1) are periods in which the packet transmission function is activate only in the central apparatus 200. Similarly, for example, the period (1-2) is a period in which the packet transmission function is active only in the terminal apparatus 300A among the terminal apparatuses 300.

In addition, in Fig. 3, "∘" or "×" is added in correspondence with the periods (1-1), (2-1), (3-1), (4-1), and (4-1'). "∘" indicates that the terminal apparatus 300 captures a packet and performs processing according to information included in a payload, whereas "×" indicates that a packet is discarded. Further, in Fig. 3, an arrow indicates a packet transmission source and a packet transmission destination mainly in the case of "∘".

On the basis of the above description, the content of Fig. 3 is summarized. Note that, in the description using Fig. 3, for clear distinction, a packet from the central apparatus 200 to the terminal apparatus 300 is referred to as "transmission packet", and a packet from the terminal apparatus 300 to the central apparatus 200 is referred to as "return packet".

Taking the period (1-1) as an example, the transmission packet transmitted from the central apparatus 200 to the terminal apparatus 300A is "∘" in the terminal apparatus 300A because the processing unit 330 of the terminal apparatus 300A performs capturing processing, and is "×" in the terminal apparatuses 300B to 300D because the processing units 330 of the terminal apparatuses 300B to 300D perform discard processing.

As a result, in "arrow" attached to the transmission packet transmitted from the central apparatus 200 to the terminal apparatus 300A, the tip of the arrow is directed from the central apparatus 200 to the terminal apparatus 300A.

As described above, in the period (1-2), the period (2-2), the period (3-2), and the period (4-2), the return packet is transmitted from the terminal apparatus 300 to the central apparatus 200. Specifically, in a case where the terminal apparatus 300 performs necessary processing according to the information included in the payload of the corresponding transmission packet, the return packet includes information related to the processing result, and this information is generated by the generation unit 320.

Note that, as described above, for example, the return packet from the terminal apparatus 300A to the central apparatus 200 in the period (1-2) is received by the terminal apparatuses 300B to 300D also in the period (1-2), but since the packets to be captured by the terminal apparatuses 300B to 300D are transmission packets from the central apparatus 200 in the periods (2-1), (3-1), and (4-1), respectively, the processing unit 330 can determine that the packets are not packets addressed to the terminal apparatuses 300B to 300D by the difference in reception timing. Consequently, the terminal apparatuses 300B to 300D respectively perform discard processing on the return packets transmitted by the terminal apparatus 300A.

Meanwhile, for example, it is assumed that the terminal apparatus 300B cannot receive a transmission packet in the period (2-1) due to some unexpected trouble, or although the return packet is transmitted from the terminal apparatus 300B that has received the transmission packet to the central apparatus 200, a trouble occurs during the transmission of the return packet.

In this case, as a result, the central apparatus 200 cannot receive the return packet from the terminal apparatus 300B in the period (2-2). In this case, it suffices that the central apparatus 200 retransmits a transmission packet including a payload of the same content so as to correspond to the packet transmitted in the period (2-1) of the fourth cycle to the terminal apparatus 300B in the period (2-1) of the fifth cycle.

On the other hand, in a case where a similar situation occurs due to continuous inconvenience such as a failure of the terminal apparatus 300A, even if a transmission packet including a payload of the same content is repeatedly retransmitted to the terminal apparatus 300A, a return packet is not transmitted from the terminal apparatus 300A to the central apparatus 200. Consequently, in a case where the return packet from the terminal apparatus 300A cannot be received even if the central apparatus 200 performs retransmission of the transmission packet including the payload of the same content a predetermined number of times, the retransmission may be stopped. Furthermore, in this case, an alert indicating this situation may be issued to a system administrator or the like.

In summary, in the example illustrated in Fig. 3, packet communication is performed between the central apparatus 200 and the terminal apparatuses 300A to 300C as follows. That is, when transmission packets addressed to the terminal apparatuses 300A to 300C are transmitted from the central apparatus 200, in the terminal apparatuses 300A to 300C, each processing unit 330 captures the transmission packet and transmits a reply packet corresponding to the transmission packet to the central apparatus 200.

Next, packet communication in a case where the terminal apparatus 300C also functions as a repeater will be described. First, in a case where the terminal apparatus 300C does not perform a repeat operation, processing similar to the processing of the terminal apparatuses 300A to 300B is performed.

On the other hand, when performing the repeat operation, the terminal apparatus 300C performs the downlink repeat operation in the period (4-1) and the period (4-1') following the period (3-2) in Fig. 3. Originally, a transmission packet from the central apparatus 200 to the terminal apparatus 300D is directly received and captured by the terminal apparatus 300D, but in a case where it is determined that the transmission packet cannot be directly received by the terminal apparatus 300D and this determination is set in the setting unit 340, the processing unit 330 of the terminal apparatus 300C transfers the received transmission packet to the terminal apparatus 300D in the period (4-1').

Further, the terminal apparatus 300C performs the uplink repeat operation in the period (4-2) and the period (4-2'). Originally, a return packet from the terminal apparatus 300D to the central apparatus 200 is directly received by the central apparatus 200, but in a case where it is determined that the return packet cannot be directly received by the central apparatus 200 and this determination is set in the setting unit 340, the processing unit 330 of the terminal apparatus 300C transfers the received return packet to the central apparatus 200 in the period (4-2').

In summary, in the example illustrated in Fig. 3, in a case where the terminal apparatus 300C functions as a repeater, when a transmission packet from the central apparatus 200 to the terminal apparatus 300D is transmitted in the period (4-1), the terminal apparatus 300C captures the transmission packet and transfers the transmission packet to the terminal apparatus 300D in the period (4-1'). Thereafter, when a reply packet to the transmission packet is transmitted from the terminal apparatus 300D to the central apparatus 200 in the period (4-2), the terminal apparatus 300C captures the reply packet and performs processing of transferring the reply packet to the central apparatus 200 in the period (4-2').

Note that the term "transfer" used in the present specification includes not only transferring a packet in which information included in a payload of a received packet is held as it is and only header information is overwritten with the content such as a format illustrated in Fig. 4D to be described later, but also extracting information included in the payload of the received packet, including the information in the payload of a packet to be generated, and transmitting a newly created packet including a header having the content such as the format of Fig. 4D.

Here, although the operation in a case where the terminal apparatus 300D is an apparatus repeated by the repeater has been described together with the operation of the terminal apparatus 300C, the operation of the processing unit 330 of the terminal apparatus 300D is extracted and summarized.

In the example illustrated in Fig. 3, if a transmission packet is transmitted from the central apparatus 200 to the terminal apparatus 300D in the period (4-1), the terminal apparatus 300D cannot receive the transmission packet, but the transmission packet is transferred from the terminal apparatus 300C in the period (4-1').

Consequently, when the terminal apparatus 300D receives the transmission packet transferred from the terminal apparatus 300C in the period (4-1'), the processing unit 330 of the terminal apparatus 300D performs processing of transmitting a reply packet to the transmission packet to the central apparatus 200 in the period (4-2).

Note that it is assumed that the terminal apparatus 300D can directly receive a transmission packet addressed to the terminal apparatus 300D, which is transmitted from the central apparatus 200, because of a temporarily good communication state or the like. In this case, the terminal apparatus 300D temporarily receives the transmission packet, but since the transmission packet does not include repeating source information (in this example, the address assigned to the terminal apparatus 300C), the processing unit 330 of the terminal apparatus 300D performs processing of discarding the transmission packet under this condition.

Alternatively, the transmission packet to be discarded may be regarded as a packet transferred from the terminal apparatus 300C. In this way, in a case where the terminal apparatus 300D receives transmission packets of the same content from both the central apparatus 200 and the terminal apparatus 300C, it is possible to avoid some inconvenience caused by performing processing in an overlapping manner.

Note that, although the central apparatus 200 and the terminal apparatus 300 have different configuration examples, the central apparatus 200 and the terminal apparatus 300 may have the same configuration as an apparatus that incorporates a unique part of the terminal apparatus 300 illustrated in Fig. 2B in the central apparatus 200 illustrated in Fig. 2A.

In this way, as described above, in some cases, the central apparatus 200 functions as the terminal apparatus 300 under certain conditions, and conversely, the terminal apparatus 300 can function as the central apparatus 200 under certain conditions.

### <Description of Packet>

Fig. 4 is a diagram illustrating formats of packets generated by the central apparatus 200 and the terminal apparatuses 300A and 300C to 300D illustrated in Fig. 1.

Here, a packet format on the premise of a packet communication system in which the destination of a packet is not included in the header of the packet will be described. However, in the case of a packet communication system in which the destination of a packet is included in the header of the packet, it suffices to include the destination of a repeat destination in the header, and thus it is unnecessary to include information indicating whether or not to functions as a repeater in the packet.

Fig. 4A illustrates a format of a packet generated by the central apparatus 200, Fig. 4B illustrates a format of a packet generated by the terminal apparatus 300A, Fig. 4C illustrates a format of a packet generated in a case where the terminal apparatus 300C does not function as a repeater, Fig. 4D illustrates a format of a downlink transfer packet generated in a case where the terminal apparatus 300C functions as a repeater, and Fig. 4E illustrates a format of a packet generated in a case where the terminal apparatus 300D does not function as a repeater.

Each of the headers of the packets illustrated in Fig. 4 includes a transmission-source information storage unit 20a that stores information indicating the transmission source of the packet, and a repeater information storage unit 20b that stores information indicating whether or not to function as a repeater and indicating the repeating source of the packet when functioning as a repeater.

Further, in the present embodiment, the address uniquely assigned to the central apparatus 200 is determined as "00", the address uniquely assigned to the terminal apparatus 300A is determined as "01", and the address uniquely assigned to the terminal apparatus 300B is determined as "02". These addresses are used as information to be stored in the transmission-source information storage unit 20a or the repeater information storage unit 20b.

Consequently, for example, as illustrated in Fig. 4A, "00" that is the address uniquely assigned to the central apparatus 200 is stored in the transmission-source information storage unit 20a of the packet generated by the generation unit 220 of the central apparatus 200.

Similarly, as illustrated in Fig. 4B, "01" that is the address uniquely assigned to the terminal apparatus 300A is stored in the transmission-source information storage unit 20a of the packet generated by the generation unit 320 of the terminal apparatus 300A.

On the other hand, in a case where the terminal apparatus 300C does not function as a repeater, as illustrated in Fig. 4C, "03" that is the address uniquely assigned to the terminal apparatus 300C is stored in the transmission-source information storage unit 20a of the packet generated by the generation unit 320 of the terminal apparatus 300C, and in a case where the terminal apparatus 300C functions as a repeater, as illustrated in Fig. 4D, "00" that is the address uniquely assigned to the central apparatus 200 is stored (downlink), or "04" that is the address uniquely assigned to the terminal apparatus 300D is stored (uplink) in the transmission-source information storage unit 20a of the packet generated by the generation unit 320 of the terminal apparatus 300C.

In addition, as illustrated in Fig. 4E, "04" that is the address uniquely assigned to the terminal apparatus 300D is stored in the transmission-source information storage unit 20a of the packet generated by the generation unit 320 of the terminal apparatus 300D.

Furthermore, the example illustrated in Fig. 4 illustrates an example in which it is determined that the repeater information storage unit 20b includes "FF" in a case where the terminal apparatus does not function as a repeater, and an address uniquely assigned to the terminal apparatus in a case where the terminal apparatus functions as a repeater.

In this example, while the information indicating that the terminal apparatus does not function as a repeater is stored in Figs. 4A to 4C and 4E, the information indicating that the terminal apparatus functions as a repeater is stored in Fig. 4D.

Note that, in the present embodiment, the case where the information "FF" is included in the repeater information storage unit 20b by the generation unit 320 of the terminal apparatus 300 that does not function as a repeater is synonymous with the case where the repeating source information is not included in the repeater information storage unit 20b of a packet.

Meanwhile, for example, as illustrated in Fig. 3, in a case where the terminal apparatus 300C repeats the central apparatus 200 and the terminal apparatus 300D, "repeating" is set in the setting unit 340 of the terminal apparatus 300C, "repeated" is set in the setting unit 340 of the terminal apparatus 300D, and none of these settings is set in the setting unit 340 of each of the terminal apparatuses 300A to 300B.

As a result, under this condition, the terminal apparatus 300C uses the packet with the format illustrated in Fig. 4C in the period (3-2), and uses the packet with the format illustrated in Fig. 4D in the period (4-1'). Information for achieving this operation is set in the setting unit 340.

Note that, in a case where the terminal apparatus 300C repeats the central apparatus 200 and the terminal apparatus 300D, as described above, in the period (4-2'), "04" that is the address uniquely assigned to the terminal apparatus 300D is stored in the transmission-source information storage unit 20a. The repeater information storage unit 20b then stores "03" that is the address uniquely assigned to the terminal apparatus 300C.

### <Description of Operation of Packet Communication System>

Next, the operation of the packet communication system of the present embodiment will be described in chronological order, focusing on particularly important points, although the contents partially overlap with those described above. Here, a description will be given on the assumption that the terminal apparatus 300C repeats the central apparatus 200 and the terminal apparatus 300D.

First, prior to the operation of the packet communication system of the present embodiment, as a typical example, the designer of the packet communication system of the present embodiment determines whether or not the terminal apparatus 300C needs to function as a repeater, in the example described above.

The determination as to whether the terminal apparatus 300C functions as a repeater can be made in advance not only in a case where the communication cable 100 connecting the central apparatus 200 and the terminal apparatus 300D has to be long, but also in a case where, prior to the operation of the packet communication system, packet transfer is experimentally performed in the packet communication system and it is checked whether communication is successfully performed.

In the following description, as in the description using Fig. 3, a packet from the central apparatus 200 to the terminal apparatus 300 is referred to as "transmission packet", a packet from the terminal apparatus 300 to the central apparatus 200 is referred to as "return packet", and a packet transferred by the terminal apparatus 300C is referred to as "repeating packet".

First, when the packet communication system of the present embodiment is actually operated, the generation unit 220 of the central apparatus 200 illustrated in Fig. 2A generates a transmission packet for the terminal apparatus 300A in which predetermined information is included in a payload.

In the header of the transmission packet, as illustrated in Fig. 4A, "00" is stored in the transmission-source information storage unit 20a, and "FF" is stored in the repeater information storage unit 20b. The transmission packet generated by the generation unit 220 is output to the communication unit 210.

When the transmission packet generated by the generation unit 220 is input, the communication unit 210 transmits the transmission packet to the communication cable 100 on condition that the period (1-1) arrives. In this case, the transmission packet is transmitted through the communication cable 100 and received by each of the terminal apparatuses 300A to 300C. Note that since the communication cable 100 connecting the central apparatus 200 and the terminal apparatus 300D is long, a communication packet does not reach the terminal apparatus 300D.

The terminal apparatus 300A can determine that the transmission packet is addressed to the terminal apparatus 300A because the transmission packet is a packet received in the period (1-1). Consequently, the processing unit 330 performs processing according to the information included in the payload.

Note that in the terminal apparatuses 300B to 300C, since the packet is not transmitted at the transmission timing of the packets addressed to the terminal apparatuses 300B to 300C, the processing unit 330 performs processing of discarding the packet.

Here, for example, it is assumed that the device connected to the terminal apparatus 300A is a temperature sensor, and information included in the payload of the transmission packet transmitted from the central apparatus 200 is returning temperature information indicated by the temperature sensor.

In this case, the terminal apparatus 300A requests the temperature sensor to output the temperature information in accordance with the information from the central apparatus 200. Then, when the temperature information is acquired from the temperature sensor, the generation unit 320 of the terminal apparatus 300B generates a return packet including the temperature information in the payload.

In this return packet, as illustrated in Fig. 4B, the address "01" assigned to the terminal apparatus 300A is stored in the transmission-source information storage unit 20a, and "FF" is stored in the repeater information storage unit 20b. The return packet generated by the generation unit 320 is output to the communication unit 310 of the terminal apparatus 300A.

When the return packet generated by the generation unit 320 of the terminal apparatus 300A is input, the communication unit 310 of the terminal apparatus 300A transmits the return packet to the communication cable 100 on condition that the period (1-2) arrives.

The return packet is transmitted through the communication cable 100 and received by the central apparatus 200 during the period (1-2). As a result, the central apparatus 200 can acquire the temperature information of the temperature sensor connected to the terminal apparatus 300A. Note that the terminal apparatuses 300B to 300D discard the return packets received during the period (1-2), respectively.

Processing similar to the processing between the central apparatus 200 and the terminal apparatus 300A in the paired periods such as the period (1-1) and the period (1-2) described above is also performed between the central apparatus 200 and the terminal apparatuses 300B to 300C in the period (2-1) to the period (3-2).

Next, transmission and reception of packets between the central apparatus 200 and the terminal apparatus 300D will be described. In this case, in the central apparatus 200, the generation unit 220 generates a transmission packet, and the communication unit 210 transmits the transmission packet to the communication cable 100 on condition that the period (4-1) arrives.

Then, since the transmission packet is a packet that needs to be repeated, in a case where the transmission packet is received by the terminal apparatus 300C during the period (4-1), the transmission packet is captured according to the setting information of the setting unit 340. Since the processing unit 330 of the terminal apparatus 300C can grasp that the transmission packet is addressed to the terminal apparatus 300D on the basis of the reception timing or the like, the processing unit 330 instructs the generation unit 320 to generate a repeating packet for the terminal apparatus 300D.

Upon receiving this instruction, for example, the generation unit 320 of the terminal apparatus 300C generates a repeating packet with a header in which the information included in the payload of the received transmission packet is duplicated and included in the payload, and as illustrated in Fig. 4D, "00" assigned to the central apparatus 200 that is the transmission source of the transmission packet is included in the transmission-source information storage unit 20a, and "03" assign to the terminal apparatus 300C is included in the repeater information storage unit 20b, and outputs the generated repeating packet to the communication unit 310 of the terminal apparatus 300C.

When receiving the repeating packet generated by the generation unit 320 of the terminal apparatus 300C, the communication unit 310 of the terminal apparatus 300C transmits the repeating packet to the communication cable 100 in the period (4-1'). The repeating packet is transmitted through the communication cable 100 and received by the central apparatus 200 and the terminal apparatuses 300A, 300B, and 300D.

First, in the central apparatus 200, all the received packets are once captured, and the header of the repeating packet is referred to by the processing unit 230. Here, the transmission-source information storage unit 20a of the header of the repeating packet includes the address "00" assigned to the central apparatus 200. For this reason, the processing unit 230 of the central apparatus 200 determines that the repeating packet is not a packet for the central apparatus 200 and discards the repeating packet.

Furthermore, since it can be determined in the terminal apparatuses 300A to 300B that the repeating packet received in the period (4-1') is not addressed to the terminal apparatuses 300A to 300B, the processing unit 330 performs discard processing.

On the other hand, since it can be determined in the terminal apparatus 300D that the repeating packet received in the period (4-1') is addressed to the terminal apparatus 300D, the repeating packet is captured. In this way, the information included in the payload of the transmission packet from the central apparatus 200 to the terminal apparatus 300D reaches the terminal apparatus 300D.

Thereafter, the processing unit 330 of the terminal apparatus 300D refers to the header of the captured repeating packet. Here, since "03" is included in the repeater information storage unit 20b, it can be determined that this packet is repeated by the terminal apparatus 300C and transferred from the central apparatus 200. Consequently, the processing unit 330 of the terminal apparatus 300D only needs to perform processing according to the information included in the payload of the repeating packet.

Thereafter, in the generation unit 320 of the terminal apparatus 300B, as illustrated in Fig. 4E, a return packet with a header in which "04" is included in the transmission-source information storage unit 20a and "FF" is included in the repeater information storage unit 20b is generated, and when the period (4-2) arrives, the return packet is transmitted to the communication cable 100 through the communication unit 310 of the terminal apparatus 300D.

This return packet is transmitted through the communication cable 100 and received by the terminal apparatus 300C during the period (4-2). In the terminal apparatus 300C, a repeating packet with a header in which "04" is included in the transmission-source information storage unit 20a and "03" is included in the repeater information storage unit 20b is generated and output to the communication unit 310 of the terminal apparatus 300C.

When the repeating packet generated by the generation unit 320 of the terminal apparatus 300C is input, the communication unit 310 of the terminal apparatus 300C transmits the repeating packet to the communication cable 100 on condition that the period (4-2') arrives.

This repeating packet is transmitted through the communication cable 100 and received by the central apparatus 200 during the period (4-2'). In this way, the central apparatus 200 can acquire information related to the device connected to the terminal apparatus 300D. Note that the packets received by the terminal apparatuses 300A, 300B, and 300D during the period (4-2') are not addressed to the terminal apparatuses 300A, 300B, and 300D, and thus are discarded.

As described above, according to the packet communication system of the present embodiment, even in a case where a high packet communication speed is required, it is possible to prevent the length of the communication cable 100 connecting the central apparatus 200 and the terminal apparatus 300 from being limited by incorporating a repeater as necessary.

### (Second Embodiment)

### <Outline and Description of Configuration>

The packet communication system of the present embodiment avoids a disadvantage caused by a trade-off between the communication speed of packet communication between the central apparatus 200 and the terminal apparatus 300 and the length of the communication cable 100 connecting the central apparatus 200 and the terminal apparatus 300 by a method of setting the packet communication speed with the central apparatus 200 for each of the terminal apparatuses 300A to 300D.

Here, it is ideally conceivable that the system designer individually sets the communication speed between the central apparatus 200 and each of the terminal apparatuses 300A to 300D to the fastest communication speed at which communication is possible prior to the start of operation of the packet communication system of the present embodiment.

That is, in the example illustrated in Fig. 1, since the communication cable 100 connecting the central apparatus 200 and the terminal apparatus 300A is the shortest, a relatively high communication speed of, for example, 3 Mbps is set between these apparatuses, and since the communication cable 100 connecting the central apparatus 200 and the terminal apparatus 300D is the longest, a low communication speed of, for example, 20 Kbps is set between these apparatuses.

However, in this case, as the number of the terminal apparatuses 300 used in the packet communication system increases, the number of communication speed settings is forced to increase, and if the system designer needs to measure the packet communication speed between the central apparatus 200 and the terminal apparatus 300 in order to determine each speed, it takes a lot of time, which is not realistic.

The packet communication system of the present embodiment enables the fastest communication speed at which communication is possible to be individually set between the central apparatus 200 and each of the terminal apparatuses 300A to 300D even if the system designer does not perform such a troublesome operation.

### <Description of Configurations of Central apparatus 200 and Terminal apparatus 300>

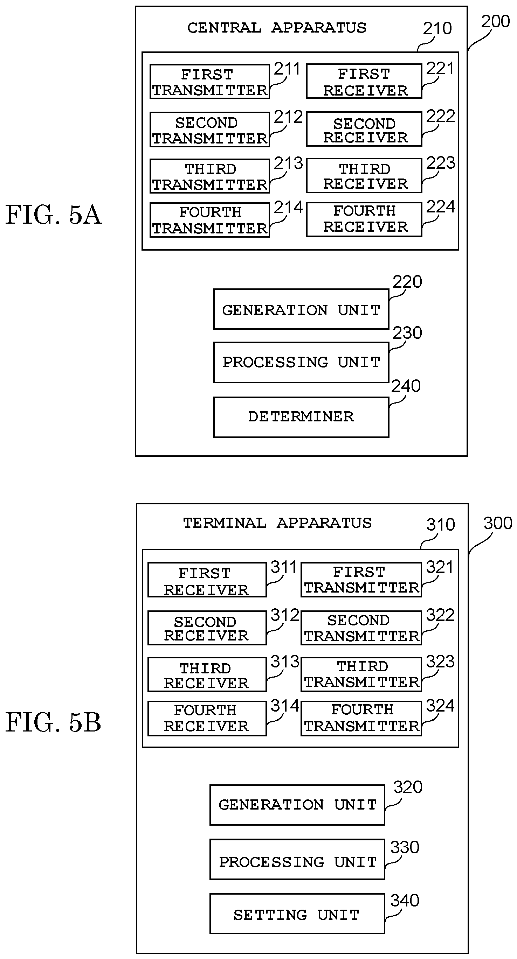

Fig. 5 is a block diagram illustrating a schematic configuration of the central apparatus 200 and the terminal apparatus 300 according to a second embodiment of the present invention. Fig. 5A illustrates a configuration of the central apparatus 200, and Fig. 5B illustrates a configuration of the terminal apparatus 300.

As illustrated in Fig. 5A, the communication unit 210 of the central apparatus 200 includes a first transmitter 211 capable of transmitting a packet at a first speed, a second transmitter 212 capable of transmitting a packet at a second speed lower than the first speed, a third transmitter 213 capable of transmitting a packet at a third speed lower than the second speed, a fourth transmitter 214 capable of transmitting a packet at a fourth speed lower than the third speed, and first to fourth receivers 221 to 224 that respectively correspond to the first to fourth transmitters 211 to 214 and receive packets transmitted at the first to fourth speeds.

However, instead of including physically four transmitters such as the first to fourth transmitters 211 to 214 and physically four receivers such as the first to fourth receivers 221 to 224, for example, one transmitter and one receiver each having a variable packet transmission speed can be included. In addition, the number of transmitters and receivers illustrated in Fig. 5A is exemplary, and may be larger or smaller. The same applies to first to fourth transmitters 321 to 324 and first to fourth receivers 311 to 314 illustrated in Fig. 5B, which will be described below.

Regarding the speed of the packet transmitted from each of the first to fourth transmitters 211 to 214, it is necessary to transmit the packets at fixed speeds different from each other. For example, the first speed may be set to 3 Mbps, the second speed may be set to 1 Mbps, the third speed may be set to 300 kbps, and the fourth speed may be set to 20 kbps, as appropriate.

In addition, the central apparatus 200 includes a determiner 240 that determines, in a case where packets are transmitted from the first to fourth transmitters 211 to 214, whether or not the packets are received by the first to fourth receivers 311 to 314 to be described below.

However, it is not essential to provide the determiner 240 in the central apparatus 200, and the determiner 240 can be provided in the terminal apparatus 300, for example, or can be connected to the communication cable 100 as a dedicated device separately from the central apparatus 200 and the terminal apparatus 300.

As illustrated in Fig. 5B, the terminal apparatus 300 includes the first to fourth receivers 311 to 314 capable of receiving packets transmitted from the first to fourth transmitters 211 to 214 at the first to fourth speeds, and the first to fourth transmitters 321 to 324 that transmit packets at the same speed as that at the time when the packets are received by the first to fourth receivers 311 to 314.

### <Description of Operation of Packet Communication System>

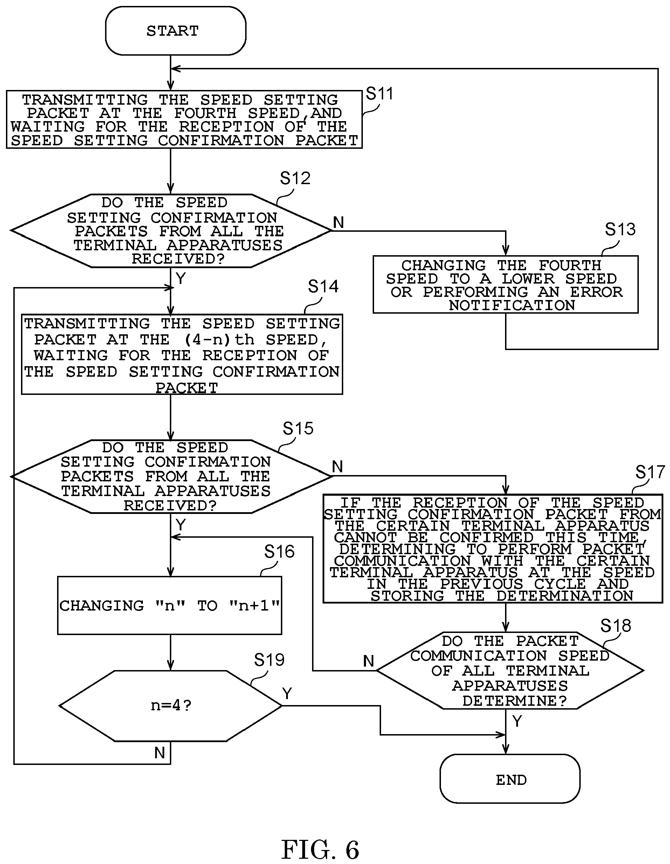

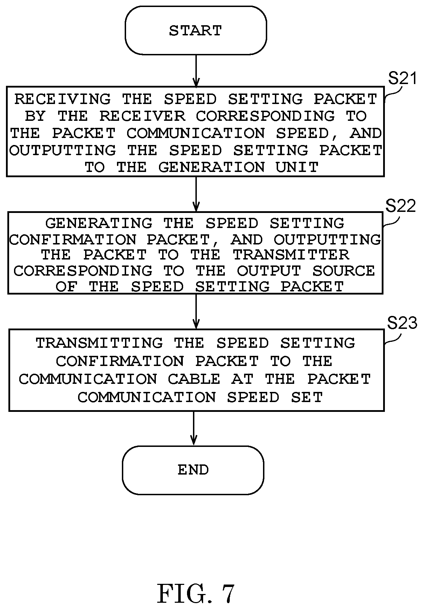

Figs. 6 to 7 are flowcharts illustrating operations between the central apparatus 200 and the terminal apparatus 300 illustrated in Fig. 5. Fig. 6 illustrates an operation of the central apparatus 200, and Fig. 7 illustrates an operation of the terminal apparatus 300.

First, the packet communication speed is set before the operation of the packet communication system starts. Here, for convenience, a packet generated in the central apparatus 200 at the time of setting the packet communication speed is referred to as "speed setting packet", and a packet generated in the terminal apparatus 300 to notify the central apparatus 200 that the speed setting packet is received at the time of setting the packet communication speed is referred to as "speed setting confirmation packet".

The payload of the speed setting packet can include information indicating that the packet is for setting the packet communication speed. Furthermore, the payload of the packet can selectively include information indicating the transmission speed of the packet. The transmission-source information storage unit 20a of the header of the speed setting packet can include "00" as the transmission source information, for example, similarly to the case of the first embodiment.

On the other hand, the payload of the speed setting confirmation packet can include each piece of information similar to that of the speed setting packet. Further, the transmission-source information storage unit 20a of the header of the speed setting confirmation packet can include any one of "01" to "04" as the transmission source information, for example, in the same manner as in the first embodiment.

Here, the operation illustrated in Fig. 6 will be schematically described. The speed setting packets are transmitted from the central apparatus 200 to the terminal apparatus 300 a plurality of times, and all the speed setting packets are transmitted at fixed and predetermined speeds different from each other.

First, for example, the speed setting packet is sequentially transmitted to the terminal apparatuses 300A to 300D by the fourth transmitter 214 at the fourth speed that is the slowest speed among these speeds in the first cycle. Consequently, one of the terminal apparatuses 300 that receives the speed setting packet by the fourth receiver 314 can generate a corresponding speed setting confirmation packet and transmit the generated speed setting confirmation packet at the fourth speed by the fourth transmitter 324, while one of the terminal apparatuses 300 that does not receive the speed setting packet by the fourth receiver 314 cannot generate a corresponding speed setting confirmation packet and transmit the generated speed setting confirmation packet at the fourth speed by the fourth transmitter 324.

Next, on condition that the speed setting confirmation packet is returned from any one of the terminal apparatuses 300, the central apparatus 200 generates a speed setting packet to be transmitted at the third speed in the second cycle, and sequentially transmits the speed setting packet to the terminal apparatuses 300A to 300D or only the terminal apparatus that has made a reply.

Thereafter, similarly, until the return of the corresponding speed setting confirmation packets cannot be received from all the terminal apparatuses 300, or until the speed setting packet is transmitted at the first speed and the reply of the corresponding speed setting confirmation packet is received from any one of the terminal apparatuses 300, the operation of changing the transmission speed of the speed setting packet and transmitting the speed setting packet to the terminal apparatuses 300A to 300D or only the terminal apparatus that has made a reply is repeated.

The determiner 240 determines that the communication speed is the fastest communication speed communicable for a specific terminal apparatus on the basis of whether or not the speed setting confirmation packet can be received from the specific terminal apparatus. Specifically, in this example, the determiner 240 increases the packet communication speed from the fourth speed to the first speed every cycle, and determines that the communication speed of the speed setting packet transmitted last time is the fastest communication speed communicable for the specific terminal apparatus that cannot receive the speed setting confirmation packet.

Note that, in a case where even if the speed setting packet with the first speed, which is the fastest, is transmitted, the return of the corresponding speed setting confirmation packet can be received, the determiner 240 determines that the communication speed with the terminal apparatus that is the transmission source of the speed setting confirmation packet is the first speed.

According to such a method, since the central apparatus 200 can determine the fastest communication speed at which each of the terminal apparatuses 300A to 300D can communicate, packet communication between the central apparatus 200 and the terminal apparatus 300 can be performed at the communication speed determined for each of the terminal apparatuses 300A to 300D.

Note that, in this example, an example has been described in which the communication speed of the speed setting packet is gradually increased from the slowest one to the fastest one, but the communication speed can also gradually decrease from the fastest one to the slowest one. Alternatively, in the present embodiment, since the first to fourth receivers 311 to 314 and the first to fourth transmitters 321 to 324 are provided so as to correspond to each other, the speed setting packet may be transmitted with the communication speed being in a random order.

On the basis of the above, first, the operation of the central apparatus 200 will be described in detail. First, in the central apparatus 200, the generation unit 220 generates a speed setting packet in the first cycle according to an instruction from a system designer and outputs the speed setting packet to the fourth transmitter 214.

When the speed setting packet generated by the generation unit 220 is input, the fourth transmitter 214 transmits the speed setting packet to the terminal apparatus 300 through the communication cable 100 at the fourth speed in the first cycle, and the central apparatus 200 waits for the reception of the speed setting confirmation packet from the terminal apparatus 300 in the first cycle (step S11).

Next, in the central apparatus 200, when the first cycle ends, the determiner 240 grasps whether or not the speed setting confirmation packets from all the terminal apparatuses 300A to 300D are received by the fourth receiver 224. Consequently, in a case where the reception of the speed setting confirmation packets from all the terminal apparatuses 300A to 300D cannot be confirmed, the process proceeds to step S13, and otherwise, the process proceeds to step S14 (step S12).

Here, the case where the reception of the speed setting confirmation packets from all the terminal apparatuses 300A to 300D cannot be confirmed in the first cycle means that packet communication cannot be performed even at the fourth speed at least in the terminal apparatus 300D, where the communication cable 100 between the terminal apparatus 300D and the central apparatus 200 is the longest. Consequently, in this case, the determiner 240 changes the fourth speed to a lower speed or performs an error notification to prompt a system designer to cause any terminal apparatus 300 except for the terminal apparatus 300D to have the function of the repeater described in the first embodiment (step S13).

On the other hand, in a case where the reception of the speed setting confirmation packets in the fourth receiver 224 from all the terminal apparatuses 300A to 300D can be confirmed in the first cycle, the generation unit 220 generates a speed setting packet that includes the information indicating a (4-n)th speed in the second cycle, and outputs the speed setting packet to a (4-n)th transmitter. When the speed setting packet generated by the generation unit 220 in the second cycle is input, the (4-n)th transmitter transmits the speed setting packet to the terminal apparatus 300 through the communication cable 100 at the (4-n)th speed, and the central apparatus 200 waits for the reception of the speed setting confirmation packet from the terminal apparatus 300 in the second cycle as in the first cycle (step S14).

Here, when the speed setting process starts, n = 1 is set as an initial setting in determiner 240. Consequently, when performing step S14 for the first time, the generation unit 220 generates a speed setting packet that includes information indicating the third speed, and outputs the speed setting packet to the third transmitter 213.

Then, in step S16 to be described later, since the determiner 240 performs the process of changing "n" to "n+1", for example, when step S14 is performed for the second time, the generation unit 220 generates a speed setting packet that includes information indicating the second speed and outputs the speed setting packet to the second transmitter 212, finally, generates a speed setting packet that includes information indicating the first speed and outputs the speed setting packet to the first transmitter 211.

Next, in the central apparatus 200, the determiner 240 confirms whether or not the speed setting confirmation packets are received from all the terminal apparatuses 300A to 300D in the predetermined cycle similarly to the processing of step S12. As a result, in a case where the reception of the speed setting confirmation packets from all the terminal apparatuses 300A to 300D cannot be confirmed, the process proceeds to step S17, and otherwise, the process proceeds to step S16 (step S15).

The case where the reception of the speed setting confirmation packets from all the terminal apparatuses 300A to 300D cannot be confirmed at this state means that packet communication cannot be performed at the third speed at least in the terminal apparatus 300D, where the communication cable 100 between the terminal apparatus 300D and the central apparatus 200 is the longest.

In practice, for example, in the central apparatus 200, in a case where the reception of the speed setting confirmation packets from the terminal apparatuses 300A to 300C can be confirmed in the second cycle, but the reception of only the speed setting confirmation packet from the terminal apparatus 300D cannot be confirmed, the determiner 240 determines that the fourth speed in the first cycle is the fastest communicable speed with the terminal apparatus 300D, determines to perform packet communication with the terminal apparatus 300D at that speed, and stores the determination in a memory (not illustrated) (step S17).

Next, the determiner 240 confirms whether or not the packet communication speed is determined for all the terminal apparatuses 300 (step S18).

In the above example, the packet communication speed of the terminal apparatus 300D is determined, but the packet communication speeds of the terminal apparatuses 300A to 300C are not determined, and thus the process proceeds to step S16.

On the other hand, in a case where the reception of the speed setting confirmation packets from all the terminal apparatuses 300A to 300D can be confirmed in step S15, or in a case where it is confirmed that the packet communication speed is not determined for all the terminal apparatuses 300 in step S18, as described above, the determiner 240 changes "n" to "n+1" and proceeds to step S14 (step S16).

Similarly, when steps S14 to S18 are performed several times, the packet communication speed is finally determined for all the terminal apparatuses 300. Then, the packet communication speeds are sequentially stored in the memory. Note that, in this example, when the fourth cycle ends, there is no need to perform any more packet communication speed setting processing. Consequently, in order to end the processing illustrated in Fig. 6, it is determined in step S19 whether or not n=4 is satisfied, and in a case where n=4 is satisfied, the processing illustrated in Fig. 6 ends.

When the processing illustrated in Fig. 6 ends, in combination with the processing illustrated in Fig. 7, the fastest communication speed at which communication can be performed with each of the terminal apparatuses 300A to 300D can be set in the central apparatus 200.

Next, the operation of the terminal apparatus 300 will be described.

As illustrated in Fig. 7, when the speed setting packet transmitted from the central apparatus 200 reaches the terminal apparatus 300, the terminal apparatus 300 receives the speed setting packet by the receiver corresponding to the packet communication speed of the speed setting packet among the first to fourth receivers 311 to 314, and outputs the speed setting packet to the generation unit 320 (step S21).

For example, when receiving the speed setting packet transmitted from the fourth transmitter 214 of the central apparatus 200, the terminal apparatus 300 receives the speed setting packet by the fourth receiver 314 corresponding to the fourth transmitter 214, and thereafter, when receiving the speed setting packet transmitted from the third transmitter 213 of the central apparatus 200, for example, the terminal apparatus 300 receives the speed setting packet by the third receiver 313 corresponding to the third transmitter 213.

When the speed setting packet output from any one of the first to fourth receivers 311 to 314 is input, the generation unit 320 generates a speed setting confirmation packet in which information similar to the information included in the payload of the speed setting packet is included in the payload, and outputs the speed setting confirmation packet to the transmitter corresponding to the output source of the speed setting packet among the first to fourth transmitters 321 to 324 (step S22).

Specifically, when the speed setting packet output from the fourth receiver 314 is input, the generation unit 320 outputs the speed setting confirmation packet to the fourth transmitter 324 corresponding to the fourth receiver 314, and similarly, when the speed setting packet output from the third receiver 313 is input, the generation unit 320 outputs the speed setting confirmation packet to the third transmitter 323 corresponding to the third receiver 313.

When the speed setting confirmation packet output from the generation unit 320 is input, the first to fourth transmitters 321 to 324 transmit the speed setting confirmation packet to the communication cable 100 at the packet communication speed set in the first to fourth transmitters 321 to 324, specifically, at the same communication speed as the communication speed of the speed setting packet that triggers the transmission of the speed setting confirmation packet this time (step S23).

When the processing illustrated in Fig. 7 ends, in combination with the processing illustrated in Fig. 6, the fastest communication speed of the terminal apparatus 300 at which communication can be performed with the central apparatus 200 can be set in the terminal apparatus 300.

As described above, the packet communication system of the present embodiment enables the fastest communication speed at which communication is possible to be individually set between the central apparatus 200 and each of the terminal apparatuses 300A to 300D without bothering a system designer.

### (Third Embodiment)

### <Outline and Description of Configuration>

The present embodiment will describe a packet communication system capable of solving a secondary problem that may occur in the case of simply adopting the method of the first and second embodiments in a packet communication system in which it is essential to install a plurality of central apparatuses 200.

### <Description of Overall Configuration of Packet Communication System>

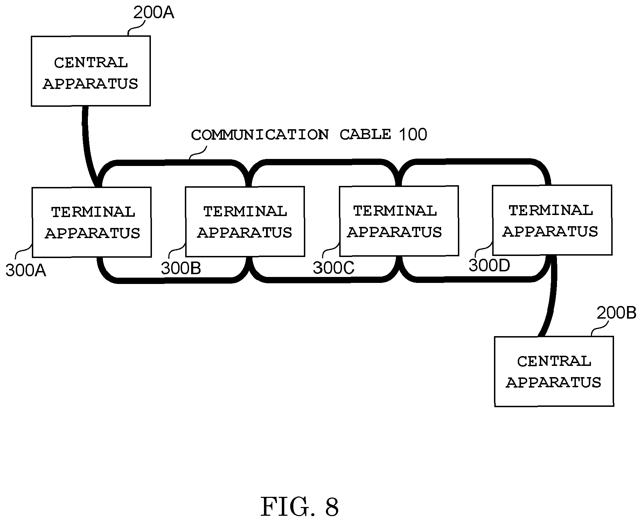

Fig. 8 is a block diagram illustrating a schematic configuration of a packet communication system according to a third embodiment of the present invention. The packet communication system illustrated in Fig. 8 is different from that illustrated in Fig. 1 in that one central apparatus 200 is changed to two central apparatuses 200A and 200B. Note that in the present embodiment, the central apparatus 200A and the central apparatus 200B are collectively referred to as "central apparatus 200".

Note that Fig. 8 illustrates a connection mode illustrating the communication cable 100 for the central apparatus 200A and the communication cable 100 for the central apparatus 200B, but the central apparatus 200A and the central apparatus 200B may be connected to one communication cable 100. That is, on the drawing, the right end of the communication cable 100 illustrated in Fig. 1 may be extended, and the central apparatus 200B may be connected to the terminal end thereof.

Here, for easy understanding, a "2-to-4 connection" packet communication system will be described in which two central apparatuses 200A to 200B and four terminal apparatuses 300A to 300D are installed. However, it should be noted that the number of the central apparatuses 200 and the terminal apparatuses 300 is not limited thereto.

Note that the central apparatus 200A and the central apparatus 200B can be synchronized with each other by being connected to each other, but in practice, the central apparatus 200A and the central apparatus 200B are often connected to host apparatuss (not illustrated) (in the first and second embodiments, the central apparatus 200 illustrated in Fig. 1 may be actually connected to a host apparatus (not illustrated)). In a case where the host apparatus is provided, the host apparatus outputs the same instruction to the central apparatus 200A and the central apparatus 200B. As a result, it is possible to achieve a configuration in which dual control of the packet communication system can be executed by the two central apparatuses 200.

Here, in the case of the packet communication system in which only one central apparatus 200 is installed as illustrated in Fig. 1, if the central apparatus 200 cannot operate due to a failure or the like, the entire system does not operate.

On the other hand, as illustrated in Fig. 8, in a case where two central apparatuses 200A to 200B are installed, even if the central apparatus 200A fails or the like, the central apparatus 200B can control the entire system as long as the central apparatus 200B does not accidentally fail or the like at this timing, so that a situation in which the entire system does not operate can be avoided.

As a cause in a case where all of the central apparatuses 200A to 200B fail at the same timing, typically, it is conceivable that a strong surge current flows simultaneously in the central apparatuses 200A to 200B. However, in order to prevent the packet communication system from stopping due to the cause, another central apparatus that is electrically disconnected from the communication cable 100 may be prepared and connected to a host apparatus, and if both of the central apparatuses 200A to 200B fail or the like, another central apparatus may be connected to the communication cable 100 to continue the packet communication.

Here, as a specific method of this type of dual control, it is conceivable that a master-slave relationship is provided between the central apparatus 200A and the central apparatus 200B, and in a normal state, only the central apparatus 200A controls the operation of the packet communication system, whereas the central apparatus 200B only performs processing of holding the control history of the central apparatus 200A, and is not involved in the control of the operation of the packet communication system.

In this case, if it is determined that the central apparatus 200A fails or the like in a case where a state where no packet is transmitted from the central apparatus 200A continues for a certain period of time, it is possible to take over the control of the operation of the packet communication system on the basis of the control history of the central apparatus 200A held by the central apparatus 200B until then and the instruction from the host apparatus.

However, in this case, there is no disadvantage as in the packet communication system of the present embodiment as described later, but there is a period during which the control of the system is inevitably not executed after the central apparatus 200A fails or the like until the central apparatus 200B takes over the control of the operation of the packet communication system.

As described above, if a situation in which all of the central apparatuses 200A to 200B fail at the same timing occurs, it cannot be helped. However, if not, it is preferable not to stop the control of the system although it depends on the application of the packet communication system.

Then, it is conceivable that, in a normal state, both the central apparatuses 200A to 200B execute control of the entire system without providing a master-slave relationship, and measures are taken to prevent disadvantages caused by adopting such a method from occurring.

Here, a disadvantage that occurs in the packet communication system of the present embodiment is caused by, for example, a time difference between the timing when the packet transmitted from the central apparatus 200A is received by the terminal apparatus 300A and the timing when the packet transmitted from the central apparatus 200B is received by the terminal apparatus 300A due to a shift in packet transmission timing and cycle in a case where a specific terminal apparatus (for example, the terminal apparatus 300A) is focused on. In particular, in a case where the packet cannot be received at a transmission destination for some reason, and further, in a case where retransmission of the packet is required, this time difference increases.

Then, specifically, in a case where the device connected to the terminal apparatus 300A is a device that has a property of being controlled by the terminal apparatus 300A, such as a motor, for example, if the instruction included in the packet causes the rotation speed of the motor to be switched between a high speed and a low speed, a phenomenon may occur in which the rotation speed of the motor is frequently switched between a high speed and a low speed in a short period. In this case, the life of the motor may be shortened, or an unexpected force may be instantaneously applied to the motor and the motor may fail.

However, in a case where the device connected to the terminal apparatus 300A is a device that does not have the property of being controlled by the terminal apparatus 300A, such as a sensor, the central apparatus 200 normally only instructs the sensor to output a sensing result, and thus the disadvantage described above does not occur.

Consequently, the packet transmission system of the present embodiment avoids the occurrence of a period during which control of the system is not executed inevitably when dual control of the device is executed by a plurality of central apparatuses 200, and prevents inconvenience due to a time difference between packet reception timings.

### <Description of Configuration of Terminal apparatus 300>

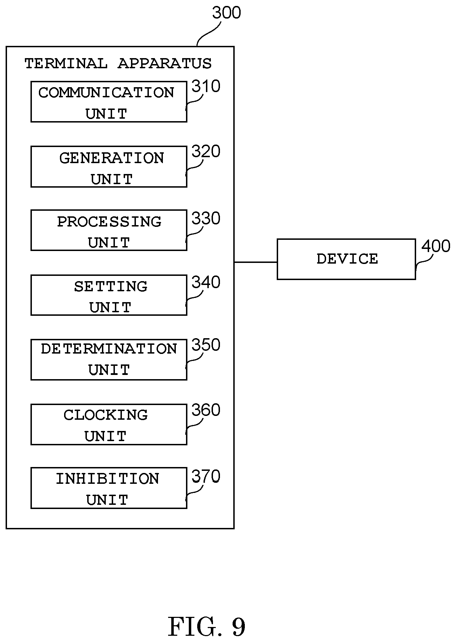

Fig. 9 is a block diagram illustrating a schematic configuration of the terminal apparatus 300 illustrated in Fig. 8. Fig. 9 also illustrates a device (a control object) 400 connected to the terminal apparatus 300. The terminal apparatus 300 illustrated in Fig. 9 includes the communication unit 310, a determination unit 350, a clocking unit 360, and an inhibition unit 370, which will be described below. The generation unit 320, the processing unit 330, and the setting unit 340 are similar to those described in the first embodiment and the like.

The communication unit 310 performs packet communication with the central apparatus 200 via the communication cable 100. The communication unit 310 includes a receiver that receives a packet transmitted from the central apparatus 200, and a transmitter that transmits an inhibition report packet to the central apparatus 200 that is a transmission source of the packet in a case where the performance of an instruction included in the payload of the packet is inhibited by the inhibition unit 370.

The determination unit 350 determines whether or not the instruction included in the payload of the packet received by the receiver of the communication unit 310 is a transition instruction to transition the state of the device 400. The device 400 referred to herein is, for example, a device whose output changes in response to an instruction from the central apparatus 200, such as a motor or a solenoid.

In a case where the determination result of the determination unit 350 is that the instruction included in the packet is a transition instruction to change the state of the device 400, the clocking unit 360 starts the clocking of a predetermined period. The predetermined period can be set by, for example, a system designer.

In a case where the instruction included in the packet received by the receiver of the communication unit 310 is a transition instruction to change the state of the device 400 during a period from when the clocking unit 360 starts the clocking of a predetermined period to when the clocking unit 360 ends clocking, the inhibition unit 370 inhibits the performance of the instruction.

### <Description of Operation of Packet Communication System>

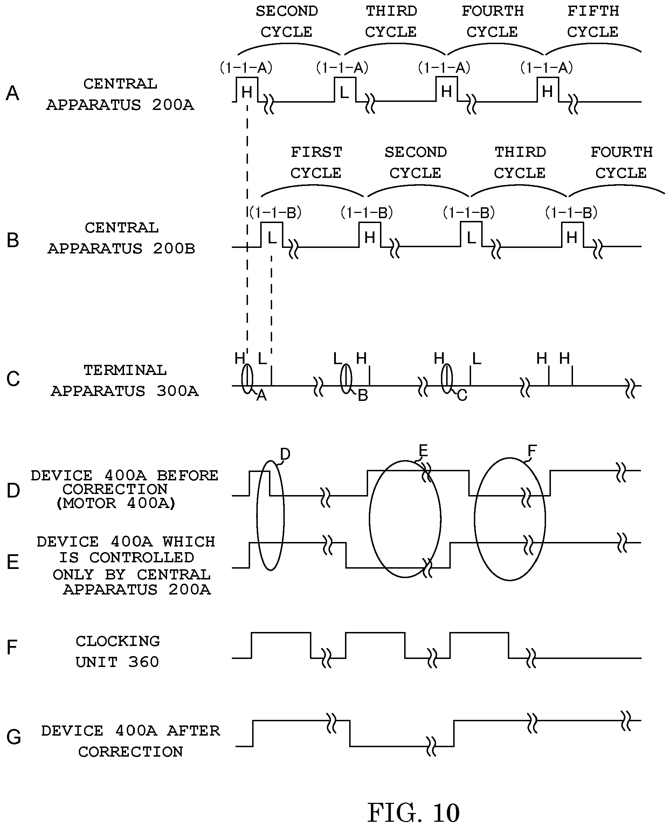

Fig. 10 is a timing diagram focusing on the central apparatus 200A and the central apparatus 200B, and the terminal apparatus 300A and the device 400A connected to the terminal apparatus 300A illustrated in Fig. 9. In Figs. 10A and 10B, regarding the period corresponding to the period (1-1) described above, the period related to the central apparatus 200A is indicated as a period (1-1-A), and the period related to the central apparatus 200B is indicated as a period (1-1-B).

In addition, "H" indicating a high-level is added if the instruction included in the packet transmitted in each of the periods (1-1-A) and (1-1-B) is a signal to instruct the device 400A (hereinafter, described as "motor 400A") to rotate at a relatively high speed, whereas "L" indicating a low-level is added if the instruction is a signal to instruct the motor 400A to rotate at a relatively low speed.

In this example, as illustrated in Fig. 10A, packets transmitted from the central apparatuses 200A to 200B are "L" in the first cycle, "H" in the second cycle, "L" in the third cycle, "H" in the fourth cycle, and "H" in the fifth cycle.

Fig. 10C illustrates the timing when the terminal apparatus 300A having received the signal included in the packet transmitted from the central apparatuses 200A to 200B outputs a command to the motor 400A on the basis of the signal.

In Fig. 10C, "H" or "L" corresponding to "H" or "L" added in Figs. 10A to 10B is added. As will be described later, timings A to C correspond to portions at which the clocking unit 360 starts the clocking of a predetermined period in Fig. 10F.

Fig. 10D illustrates a waveform of the rotation speed of the motor 400A in a case where the terminal apparatus 300A outputs a command to switch to a high-level or a low-level to the motor 400A at the timing illustrated in Fig. 10C. Fig. 10D illustrates the waveform of the rotation speed of the motor 400A before correction in a case where the disadvantage described above occurs, that is, in a case where the determination unit 350, the clocking unit 360, and the inhibition unit 370 are not present.

The waveform illustrated in Fig. 10D will be described in chronological order.

The waveform is switched to a high-level in response to the instruction of the central apparatus 200A in the second cycle,
the waveform is switched to a low-level in response to the instruction of the central apparatus 200B in the first cycle,
a low-level is maintained in response to the instruction of the central apparatus 200A in the third cycle,
the waveform is switched to a high-level in response to the instruction of the central apparatus 200B in the second cycle,
a high-level is maintained in response to the instruction of the central apparatus 200A in the fourth cycle,
the waveform is switched to a low-level in response to the instruction of the central apparatus 200B in the third cycle,
the waveform is switched to a high-level in response to the instruction of the central apparatus 200A in the sixth cycle, and
a high-level is maintained in response to the instruction of the central apparatus 200B in the fourth cycle.

Fig. 10E illustrates a waveform of the rotation speed of the motor 400A in a case where it is assumed that the terminal apparatus 300A receives only a packet from the central apparatus 200A and does not receive a packet from the central apparatus 200B.

Here, as is clear from the comparison between Fig. 10D and Fig. 10E, in a case where dual control is executed by the central apparatuses 200A to 200B in a state where the performance of an instruction is not inhibited by the inhibition unit 370, the rotation speed of the motor 400A is very different from a rotation speed in a case where control is executed only by the central apparatus 200A.

Although there are some problems in this case, it is necessary to take measures for portions in which H and L are mutually inverted in regions E and F, in addition to a portion in which H is switched to L in a short period in the region D described above.

Fig. 10F illustrates a waveform in which the period from the start to the end of clocking of the predetermined period by the clocking unit 360 of Fig. 10 is set to a high-level and another period is set to a low-level. Here, the rise in which the signal illustrated in Fig. 10F switches from a low-level to a high-level indicates the timing when the clocking unit 360 starts clocking of a predetermined time. These rises are also synchronized with the timings A to C illustrated in Fig. 10C.

The signal illustrated in Fig. 10F is switched from a low-level to a high-level in a case where it is determined that the instruction included in the packet to be determined by the determination unit 350 includes the transition instruction to change the state of the device 400.

Specifically, the timing A corresponds to an instruction to change the rotation speed of the motor 400A from "L to H", the timing B corresponds to an instruction to change the rotation speed of the motor 400A from "H to L", and the timing C corresponds to an instruction to change the rotation speed of the motor 400A from "L to H".

Fig. 10G illustrates the waveform of the rotation speed of the motor 400A corrected by the determination unit 350, the clocking unit 360, and the inhibition unit 370. In a case where the packet received by the receiver of the communication unit 310 during the predetermined period in which the signal illustrated in Fig. 10F is in a high-level includes the transition instruction to change the state of the motor 400A, the correction is performed by the inhibition unit 370 inhibiting the performance of the instruction.

Referring to the corrected waveform of the rotation speed of the motor 400A illustrated in Fig. 10G, first, since the packet of the first cycle includes a signal to instruct the motor 400A to be in a low-level, the rotation speed of the motor 400A is in a low-level at the timing before the timing A.

Then, when the timing A arrives, the packet of the second cycle from the central apparatus 200A is received by the terminal apparatus 300A. However, since this timing is not during the clocking of the predetermined period by the clocking unit 360, the packet is not discarded. Consequently, the terminal apparatus 300A instructs the motor 400A to switch the rotation speed to a high-level in response to the "H" instruction included in the packet.

Next, following the timing A, the packet of the first cycle is transmitted from the central apparatus 200B. The timing when the terminal apparatus 300A receives the packet is during the clocking of the predetermined period by the clocking unit 360. At this time, while the rotation speed of the motor 400A is in a high-level, since the packet includes a signal to instruct the motor 400A to switch to a low-level, the packet satisfies an instruction inhibition condition. As a result, the performance of the instruction included in the packet is inhibited by the inhibition unit 370.

As a result, the rotation speed of the motor 400A is maintained at a high-level until the instruction to switch to a low-level is transmitted from the central apparatus 200A or 200B, specifically, until the timing B, after the clocking unit 360 ends the current clocking of the predetermined period.

When the timing B arrives, the packet of the third cycle from the central apparatus 200A is received by the terminal apparatus 300A. This timing is not during the clocking of the predetermined period by the clocking unit 360. For this reason, the packet is not discarded. Consequently, the terminal apparatus 300A instructs the motor 400A to switch the rotation speed to a low-level in response to the "L" instruction included in the packet.

Thereafter, following the timing B, the packet of the second cycle is transmitted from the central apparatus 200B. The timing when the terminal apparatus 300A receives the packet is during the clocking of the predetermined period by the clocking unit 360. At this time, while the rotation speed of the motor 400A is in a low-level, since the packet includes a signal to instruct the motor 400A to switch to a high-level, the performance of the instruction included in the packet is inhibited by the inhibition unit 370.

As a result, the rotation speed of the motor 400A is maintained at a low-level until the instruction to switch to a high-level is transmitted from the central apparatus 200A or 200B, specifically, until the timing C, after the clocking unit 360 ends the current clocking of the predetermined period.

When the timing C arrives, the packet of the fourth cycle from the central apparatus 200A is received by the terminal apparatus 300A. This timing is not during the clocking of the predetermined period by the clocking unit 360. For this reason, the packet is not discarded. Consequently, the terminal apparatus 300A instructs the motor 400A to switch the rotation speed to a high-level in response to the "H" instruction included in the packet.

Thereafter, following the timing C, the packet of the third cycle is transmitted from the central apparatus 200B. The timing when the terminal apparatus 300A receives the packet is during the clocking of the predetermined period by the clocking unit 360. At this time, while the rotation speed of the motor 400A is in a high-level, since the packet includes a signal to instruct the motor 400A to switch to a low-level, the performance of the instruction included in the packet is inhibited by the inhibition unit 370.

As a result, the rotation speed of the motor 400A is maintained at a high-level until the instruction to switch to a low-level is transmitted from the central apparatus 200A or 200B, after the clocking unit 360 ends the clocking of the predetermined period next time.

Thereafter, in this example, as illustrated in Figs. 10C and 10D, the packet of the fourth cycle from the central apparatus 200A is received by the terminal apparatus 300A after the clocking of the predetermined period ends. Consequently, this packet is not discarded, but since the instruction to switch to a low-level is not included, the rotation speed of the motor 400A is maintained at a high-level. The same applies to processing in the case of the packet of the fourth cycle from the central apparatus 200A.

Note that, in a case where the performance of the instruction included in the packet is inhibited by the inhibition unit 370, the transmitter of the communication unit 310 transmits an inhibition report packet including a signal indicating the inhibition to the central apparatus 200B that is the transmission source of the packet. As a result, the central apparatus 200B can recognize that the rotation speed of the motor 400A has not transitioned according to the packet.

Consequently, the central apparatus 200B and the host apparatus connected thereto do not erroneously recognize that the rotation speed of the motor 400A does not function according to the instruction of the central apparatus 200B and the host apparatus, and thus, it is prevented that the central apparatus 200B and the host apparatus connected thereto give an instruction that should not be given due to erroneous recognition.

As described above, the packet communication system of the present embodiment avoids the occurrence of a period during which the control of the system is not executed inevitably when the dual control of the device is executed by a plurality of central apparatuses 200, and prevents inconvenience due to a time difference between packet reception timings.

### Examples

### (First Example)

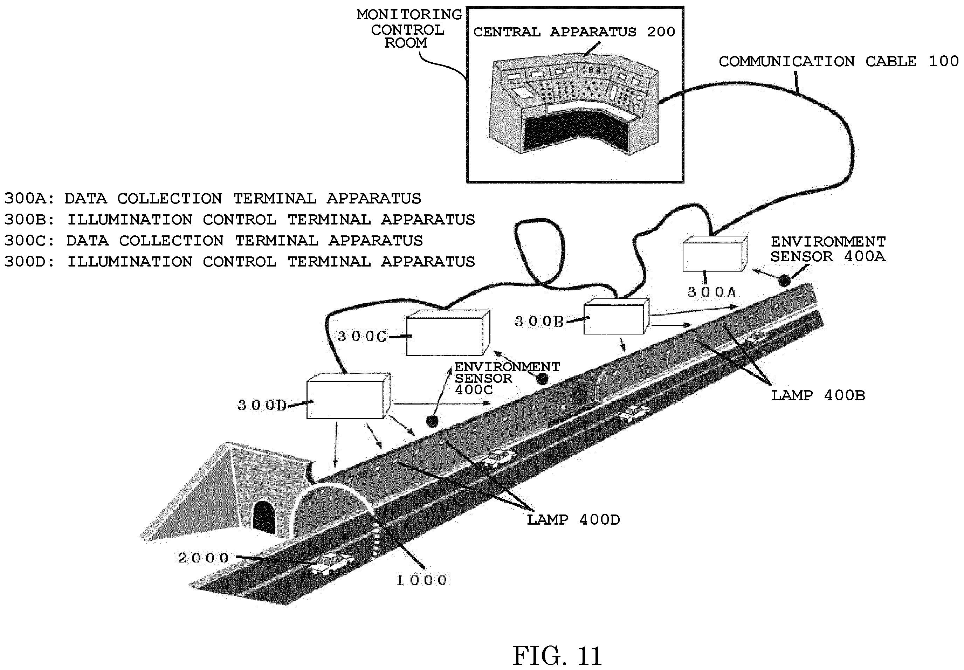

Fig. 11 is an explanatory diagram of an infrastructure system according to a first example of the present invention. The present example will describe an example in which the packet communication system described in the first to third embodiments is applied to a road facility that is an infrastructure system.

In Fig. 11, parts similar to those illustrated in Fig. 1 and the like are denoted by the same reference numerals, and a tunnel 1000 and a vehicle 2000 passing through the tunnel are components original in Fig. 11.

The length of the communication cable 100 is determined according to the length of the tunnel 1000. It is not uncommon that the tunnel 1000 has a length of several hundred meters to several kilometers. For this reason, the length of the communication cable 100 is also several hundred meters or more. Consequently, in the infrastructure system of the present example, the packet communication system described in the first embodiment can be suitably used.

The central apparatus 200 is installed in a monitoring control room where a monitoring person or the like monitors the situation in the tunnel 1000. The host apparatus described above may be provided in the monitoring control room or may be provided in another place.

The terminal apparatuses 300A and 300C are respectively connected to environment sensors 400A and 400C that collect environment data in the tunnel 1000. Examples of the environmental data in the tunnel 1000 include, but are limited thereto, various types of data such as the traffic volume of the vehicle 2000, the exhaust gas concentration in the tunnel 1000, and the amount of light of the lamps 400B and 400D, which will be described below.

The terminal apparatuses 300B and 300D are respectively connected to lamps 400B and 400D installed near the ceiling of the tunnel 1000. The terminal apparatuses 300B and 300D execute illumination control such as the amount of light of the lamps 400B and 400D on the basis of the detection results of the environment sensors 400A and 400C.

The infrastructure system of the present example can improve the environment in the tunnel 1000 and enhance the traveling comfort of the vehicle. That is, for example, in a case where the lamps 400B and 400D are turned off at the end of their lives, the environment sensors 400A and 400C can detect that the light reception intensity has decreased, so that the data collection terminal apparatuses 300A and 300C can transmit the detection result to the central apparatus 200 via the communication cable 100.

As a result, the monitoring person in the monitoring control room can perform the operation of replacing the lamps 400B and 400D, and can prevent the inside of the tunnel 1000 from becoming dark by increasing the amount of light of lamps around the lamp at the end of its life.

In addition, in a case where it is detected that the vehicle 2000 is not present in the tunnel 1000 as the environment data, energy saving can be achieved by reducing the amount of light of the lamps 400B and 400D.

Although not illustrated in Fig. 11, the vehicle 2000 also includes various control objects. Specifically, engine control when an accelerator is depressed, temperature control of an air conditioner called a car air conditioner, and the like are provided. Consequently, the packet communication system described above can also be applied to the vehicle 2000 itself.

Further, the application example of the packet communication system has been described in the present example by taking the road facility as an example, but the application example is not limited thereto, and the packet communication system can be applied to various infrastructure systems as described below.

For example, in a river facility including a dam or a bridge, opening and closing of a gate 400 is controlled on the basis of the detection result of a water level sensor 400.

For example, in a railway and a railway facility, control is executed such that a train makes an emergency stop on the basis of the detection result of an infrared sensor 400 that a passenger has fallen from a platform of a station to a track, or opening and closing of a platform door is controlled by attaching a human sensor 400 near the platform door installed on the platform of the station.

For example, in an airplane and an airport facility, an amount of outflow of oil is controlled on the basis of the detection result of a hydraulic sensor 400 in the airplane, or the amount of light of a runway guide lamp 400 is controlled on the basis of the detection result of an illuminance sensor 400 installed on a runway of the airport.

For example, in a vehicle facility including a ship and a harbor facility, the angle of a rudder is controlled on the basis of the detection result of rudder steering by a steerer, or the amount of movement on a rail is controlled according to the loading and unloading operation of an operator of a gantry crane.

As described above, the infrastructure system of the present example can be applied to a wide variety of facilities from a small-scale facility to a large-scale facility as long as it executes electrical control.

### (Second Example)

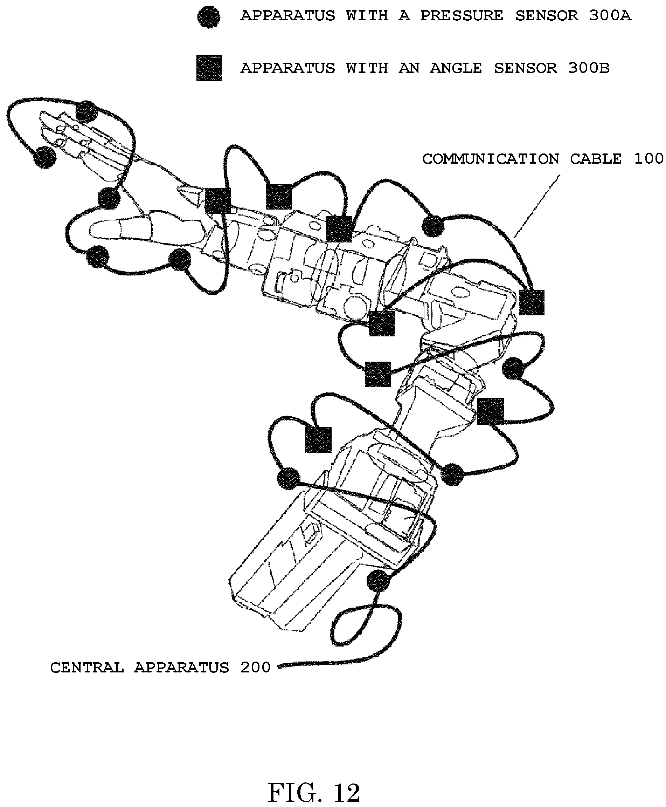

Fig. 12 is an explanatory diagram of a factory automation system according to a second example of the present invention. The present example will describe an example in which the packet communication system described in the first to third embodiments is applied to a robot arm that is factory automation.

Although an example in which the control object 400 is connected to the terminal apparatus 300 is used in the description of each embodiment, Fig. 12 describes an example of the terminal apparatus 300 with a sensor of the control object 400. Note that the illustration of the central apparatus 200 itself is omitted.

Both the terminal apparatus with a pressure sensor 300A and the terminal apparatus with an angle sensor 300B mainly perform detection for controlling the motion of a joint of a robot arm, and transmit the detection result to the central apparatus 200.

Since a relatively large number of the terminal apparatuses 300 with a sensor are used in the factory automation system of the present example, it is preferable to increase the packet communication speed between these terminal apparatuses and the central apparatus 200, and thus the packet communication system described in the second embodiment can be suitably used.

The terminal apparatus with a pressure sensor 300A is mainly provided on a finger joint, and is used to control gripping strength when gripping an object, and to control drive torque by detecting a load such as torque or load of a joint. The terminal apparatus with an angle sensor 300B is used to control the angle of a joint.

When the packet communication system described in each embodiment is used, the factory automation system of the present example can perform high-speed packet communication between a relatively large number of terminal apparatuses 300 and the central apparatus 200, so that the manufacturing throughput of a product obtained by using a robot arm can be improved.

Furthermore, the application example of the packet communication system has been described in the present example by taking a robot arm as an example, but the application example is not limited to the robot arm, and for example, the packet communication system can also be applied to the control of the operation of joints of various types of industrial robots, and the control of the movement amount, speed, rotation amount, and the like of a machine tool.

Furthermore, fire detection equipment, air conditioning equipment, and an emergency stop mechanism of a machine tool are often provided in a factory in order to ensure the safety of an operator. The packet communication system can also be applied to various types of control.

As described above, the factory automation system of the present example can be applied to a wide variety of facilities from a small-scale facility to a large-scale facility as long as it executes electrical control.

### (Third Example)

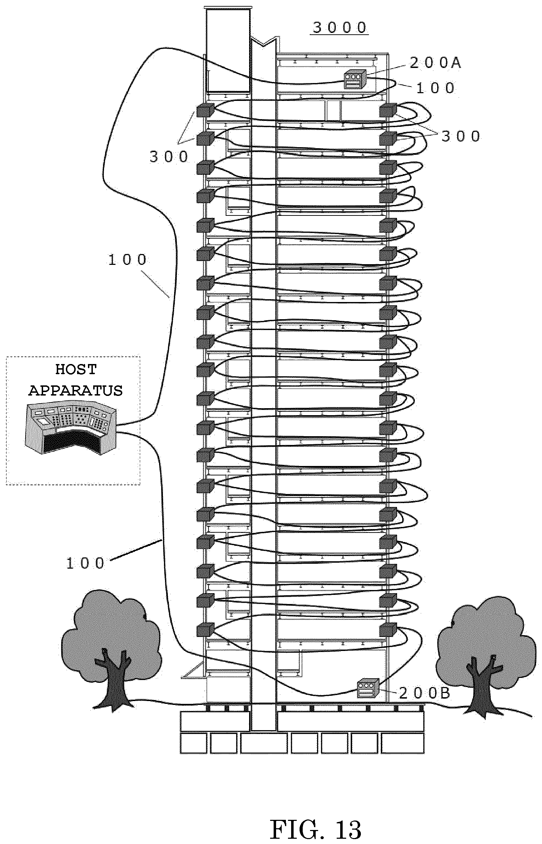

Fig. 13 is an explanatory diagram of a building automation system according to a third example of the present invention. The present example will describe an example in which the packet communication system described in the first to third embodiments is applied to a commercial facility that is a building automation system.

In Fig. 13, parts similar to those illustrated in Fig. 1 and the like are denoted by the same reference numerals, and a commercial facility 3000 such as a department store or a shopping center is a component original in Fig. 11.

The length of the communication cable 100 is determined according to the scale of the commercial facility 3000. Fig. 13 illustrates a 20-story commercial facility 3000, and in this case, the length of the communication cable 100 is several hundred meters or more. Consequently, in the building automation system of the present example, the packet communication system described in the first embodiment can be suitably used. In addition, since the two central apparatuses 200, that is, the central apparatuses 200A to 200B are provided, in the building automation system, the packet communication system described in the third embodiment can also be suitably used.

Note that the host apparatus and the central apparatuses 200A to 200B can be remotely disposed from each other, and in this case, these devices are connected in a wired or wireless manner through a line different from the communication cable 100 illustrated. The central apparatuses 200A to 200B are installed in a monitoring control room where a monitoring person or the like monitors the situation in the commercial facility 3000.

The terminal apparatus 300 is connected to a control object such as a sensor (not illustrated) that collects various types of data in the commercial facility 3000. Examples of the control object installed in the commercial facility 3000 include an elevator (elevator), a room temperature sensor and an air conditioning facility, a fire detector and a fire alarm, a disaster prevention/crime prevention facility such as an emergency report button and an emergency shutter that is opened in a normal state but closed in an emergency, a human sensor, and a light.

The building automation system of the present example can provide a comfortable space and a safe and secure space in the commercial facility 3000.

Furthermore, the application example of the packet communication system has been described in the present example by taking the commercial facility 3000 as an example. However, the building automation system is not limited to being applied to the commercial facility 3000, and can also be applied to other buildings such as an office building or an apartment building such as a condominium.

As described above, the building automation system of the present example can be applied to a wide variety of facilities from a small-scale facility to a large-scale facility as long as it executes electrical control.
In the following clauses, preferred embodiments of the invention are described:
1. A packet communication system in which a central apparatus and a plurality of terminal apparatuses are multidrop-connected to each other, wherein
   the central apparatus is an instrument that transmits a packet including transmission source information indicating the central apparatus,
   each of the terminal apparatuses is
   an instrument that can also function as a repeater, and includes
   a setting unit that sets whether or not the terminal apparatus functions as the repeater,
   a generation unit that generates a packet including repeating source information indicating the terminal apparatus in a case where it is set in the setting unit that the terminal apparatus functions as a repeater, and
   a discard unit that discards a packet that does not include the repeating source information.
2. The packet communication system according to clause 1, wherein
   the plurality of terminal apparatuses include
   a first terminal apparatus that is installed close to the central apparatus from a viewpoint of wiring, and
   a second terminal apparatus that is installed away from the central apparatus from a viewpoint of wiring, and
   in a case where the first terminal functions as a repeater that repeats communication between the central apparatus and the second terminal apparatus, the second terminal apparatus discards a packet transmitted from the central apparatus.
3. The packet communication system according to clause 1, wherein
   the central apparatus includes
   a first transmitter capable of transmitting a packet at a first speed prepared in advance, and
   a second transmitter capable of transmitting a packet at a second speed that is lower than the first speed and is prepared in advance,
   each of the terminal apparatuses includes
   a first receiver capable of receiving a packet with the first speed, and
   a second receiver capable of receiving a packet with the second speed, and
   in a case where a packet is transmitted from the first or second transmitter, each of the terminal apparatuses further includes a determiner that determines whether or not the first or second receiver can receive the packet.
4. The packet communication system according to clause 3, wherein
   each of the terminal apparatuses includes
   a first response transmitter that transmits a response packet at a first speed in a case where the first receiver receives a packet, and
   a second response transmitter that transmits a response packet at a second speed in a case where the second receiver receives a packet, and
   the central apparatus includes
   the determiner,
   a first response receiver that receives a response packet transmitted at a first speed from the first response transmitter, and
   a second response receiver that receives a response packet transmitted at a second speed from the second response transmitter.
5. The packet communication system according to clause 1, wherein
   the terminal apparatus is connected to a control object,
   the central apparatus includes
   a first central apparatus that transmits a first packet including an instruction signal for the control object to the terminal apparatus, and
   a second central apparatus that transmits a second packet including an instruction signal for the control object to the terminal apparatus,
   the central apparatus controls the control object according to an instruction signal in the first or second packet, and
   the terminal apparatus includes
   a reception unit that receives first and second packets transmitted from the first and second central apparatuses,
   a determination unit that determines whether or not a transition instruction signal to transition a state of the control object is included in the first and second packets received by the reception unit,
   a clocking unit that starts clocking of a predetermined period in a case where the determination unit determines that the transition instruction signal is included in the first or second packet, and
   an inhibition unit that inhibits performance of processing according to a transition instruction signal in a case where the determination unit determines that the transition instruction signal is included in a first or second packet received by the reception unit from when the clocking unit starts clocking of a predetermined time to when the clocking unit ends the clocking.
6. An infrastructure system comprising the packet communication system according to any one of clause 1 to 5.
7. A building automation system comprising the packet communication system according to any one of clause 1 to 5.
8. A factory automation system comprising the packet communication system according to any one of clauses 1 to 5.

## Claims

1. A packet communication system, in which a first or second central apparatus controls a control object connected to a terminal apparatus according to an instruction signal for the control object in a first or second packet, wherein
the first central apparatus transmits the first packet to the terminal apparatus, and
a second central apparatus transmits the second packet to the terminal apparatus,
the terminal apparatus includes
a reception unit that receives first and second packets transmitted from the first and second central apparatuses,
a determination unit that determines whether or not a transition instruction signal to transition a state of the control object is included in the first and second packets received by the reception unit,
a clocking unit that starts clocking of a predetermined period in a case where the determination unit determines that the transition instruction signal is included in the first or second packet, and
an inhibition unit that inhibits performance of processing according to a transition instruction signal in a case where the determination unit determines that the transition instruction signal is included in a first or second packet received by the reception unit from when the clocking unit starts clocking of a predetermined time to when the clocking unit ends the clocking.

2. An infrastructure system comprising the packet communication system according to claim 1.

3. A building automation system comprising the packet communication system according to claim 1.

4. A factory automation system comprising the packet communication system according to claim 1.
